# EUROPEAN PATENT APPLICATION

(11) **EP 3 130 994 A1**
(43) Date of publication of application: **15.02.2017**
(21) Application number: 15776617.1
(22) Date of filing: 25.03.2015
(51) Int. Cl.: G06F 3/048, H04M 1/00

(54) **DISPLAY CONTROL DEVICE, DISPLAY CONTROL METHOD, AND PROGRAM**

(30) Priority: 07.04.2014 JP 2014078590
(71) Applicant: Sony Corporation, Tokyo 108-0075 (JP)
(72) Inventor: WEN Shihhao, Tokyo 108-0075 (JP); YOKOYAMA Kazuki, Tokyo 108-0075 (JP)
(74) Representative: D Young & Co LLP
(86) International application number: PCT/JP2015/059070
(87) International publication number: WO 2015/156128

(57) **Abstract**

The present technology relates to a display control apparatus, a display control method, and a program which can implement a UI that allows a user to intuitively select an intended region in an image. A position of a display surface on which a display apparatus displays an image is detected, and a projected image obtained by projecting an image model of a predetermined image is displayed on the display surface along a straight light passing through a position of the user and a pixel of the display surface whose position is detected. The present technology can be applied to apparatuses having an image displaying function, such as a smartphone and a tablet terminal.

## Description

### TECHNICAL FIELD

The present technology relates to a display control apparatus, a display control method, and a program, and more particularly, to a display control apparatus, a display control method, and a program which can implement a User Interface (UI) that, for example, allows a user to intuitively select an intended region in an image.

### BACKGROUND ART

For example, in an image display apparatus having an image displaying function, such as a tablet, when an image, such as a still image, which is photographed by a camera, is displayed on a touch panel, for example, the touch panel on which the still image is displayed is operated so that the still image displayed on a display surface of the touch panel can be enlarged or reduced.

Note that Patent Document 1 proposes a technology in which, in a video communication system for allowing users A and B to communicate with each other, a two-dimensional image of the user B is converted into three-dimensional image information including depth information, on the basis of the two-dimensional image of the user B and the distance between the display surface and the user B, while a two-dimensional image of the user B is generated on the basis of the point-of-view position of the user A and three-dimensional image information of the user B and is displayed on the display surface of the user A, thereby providing the user with a sense of distance from a conversation partner and a sense of reality.

### CITATION LIST

### PATENT DOCUMENT

Patent Document 1: Japanese Patent Application Laid-Open No. 2011-077710

### SUMMARY OF THE INVENTION

### PROBLEMS TO BE SOLVED BY THE INVENTION

Incidentally, in the display of an image, such as a still image, on the tablet as described above, the position of the user who views the still image (the user who has the tablet with him/her), and the position of the display surface are not taken into consideration.

Accordingly, the display of the still image on the tablet is a so-called paste display in which the still image is pasted to the display surface. Therefore, even when the user or the display surface thereof is moved (in parallel), the still image displayed on the display surface of the tablet is not changed in accordance with the movement of the user or the display surface.

In the paste display as described above, when the user moves the display surface by, for example, moving the tablet, the still image displayed on the display surface is pasted to the display surface and moved in accordance with the movement of the display surface. However, the content of the still image (a pixel value of each pixel of the still image displayed on the display surface) is not changed.

Accordingly, in the paste display, for example, it is difficult to implement a User Interface (UI) that allows the user to, for example, enjoy feeling as if the user were viewing, through the display surface of the tablet as a window, an image located at the other side of the window, and to further implement a UI that allows the user to intuitively select an intended region in the image (located on the opposite side of the window).

The present technology has been made in view of the above-mentioned circumstances and can implement a UI that allows a user to intuitively select an intended region in an image.

### SOLUTIONS TO PROBLEMS

A display control apparatus or a program according to the present technology is a display control apparatus including: a detection unit that detects a position of a display surface on which a display apparatus displays an image; and a control unit that controls the display apparatus to display, on the display surface, a projected image obtained by projecting an image model of a predetermined image onto the display surface along a straight line passing through a position of a user and a pixel of the display surface, the position of the display surface being detected by the detection unit, or a program for causing a computer to function as the display control apparatus.

A display control method according to the present technology is a display control method including the steps of : detecting a position of a display surface on which a display apparatus displays an image; and controlling the display apparatus to display, on the display surf ace, a projected image obtained by projecting an image model of a predetermined image onto the display surface along a straight line passing through a position of a user and a pixel of the display surface, the position of the display surface being detected.

In the display control apparatus, the display control method, and the program according to the present technology, a position of a display surface on which a display apparatus displays an image is displayed; and, on the display surface, a projected image obtained by projecting an image model of a predetermined image onto the display surface is displayed along a straight line passing through a position of a user and a pixel of the display surface, the position of the display surface being detected by the detection unit.

Note that the display control apparatus may be an independent apparatus, or may be an internal block constituting one apparatus.

Further, the program can be provided by transmitting the program through a transmission medium, or by recording the program in a recording medium.

### EFFECTS OF THE INVENTION

According to the present technology, it is possible to implement a UI that allows a user to intuitively select an intended region in an image.

Note that advantageous effects described herein are not particularly limited, but may be any one of the advantageous effects described in this disclosure.

### BRIEF DESCRIPTION OF DRAWINGS

Fig. 1 is a perspective view showing a configuration example of one embodiment of an image display apparatus to which the present technology is applied.
Fig. 2 is a block diagram showing a functional configuration example of the image display apparatus.
Fig. 3 is a block diagram showing a configuration example of a control unit 24.
Fig. 4 is a flowchart illustrating an example of processing of the control unit 24.
Fig. 5 is a diagram illustrating the principle of generating a projected image by an image generation unit 38.
Fig. 6 is a diagram showing a first example of an image model.
Fig. 7 is a diagram showing a second example of the image model.
Fig. 8 is a diagram showing a third example of the image model.
Fig. 9 is a diagram illustrating an example of generating the projected image when a display surface 11 is moved in a horizontal direction.
Fig. 10 is a diagram further illustrating the example of generating the projected image when the display surface 11 is moved in the horizontal direction.
Fig. 11 is a diagram showing a display example of the projected image at a time T when a voxel V#1 is projected on a pixel P#1, and a display example of the projected image at a time T + 1 when the voxel V#1 is projected on a pixel P#2.
Fig. 12 is a diagram illustrating an example of generating the projected image when the display surface 11 is moved in a vertical direction.
Fig. 13 is a diagram further illustrating the example of generating the projected image when the display surface 11 is moved in the vertical direction.
Fig. 14 is a diagram showing a display example of the projected image at the time T when the voxel V#1 is projected on the pixel P#1, and a display example of the projected image at the time T + 1 when the voxel V#1 is projected on the pixel P#2.
Fig. 15 is a diagram illustrating an example of generating the projected image when the display surface 11 is moved in a depth direction.
Fig. 16 is a diagram further illustrating the example of generating the projected image when the display surface 11 is moved in the depth direction.
Fig. 17 is a diagram showing a display example of the projected image at the time T when the voxel V#1 is projected on the pixel P#1, and a display example of the projected image at the time T + 1 when the voxel V#1 is projected on the pixel P#2.
Fig. 18 is a diagram illustrating an example of generating the projected image when the display surface 11 is rotated and tilted in a pitch direction.
Fig. 19 is a diagram further illustrating the example of generating the projected image when the display surface 11 is tilted in the pitch direction.
Fig. 20 is a diagram showing a display example of the projected image at the time T when the voxel V#1 is projected on the pixel P#1, and a display example of the projected image at the time T + 1 when the voxel V#1 is projected on the pixel P#2.
Fig. 21 is a diagram showing an example of the projected image displayed on the display surface 11 when the display surface 11 tilted in the pitch direction is viewed in a direction orthogonal to the display surface 11.
Fig. 22 is a diagram illustrating an example of generating the projected image when the display surface 11 is rotated and tilted in a yaw direction.
Fig. 23 is a diagram further illustrating the example of generating the projected image when the display surface 11 is tilted in the yaw direction.
Fig. 24 is a diagram showing a display example of the projected image at the time T when the voxel V#1 is projected on the pixel P#1, and a display example of the projected image at the time T + 1 when the voxel V#1 is projected on the pixel P#2.
Fig. 25 is a diagram showing an example of the projected image displayed on the display surface 11 when the display surface 11 tilted in the yaw direction is viewed in the direction orthogonal to the display surface 11.
Fig. 26 is a diagram illustrating an example of generating the projected image when the display surface 11 is rotated and tilted in a roll direction.
Fig. 27 is a diagram further illustrating the example of generating the projected image when the display surface 11 is tilted in the roll direction.
Fig. 28 is a diagram illustrating the example of generating the projected image when the display surface 11 is tilted in the roll direction.
Fig. 29 is a diagram showing a display example of the projected image at the time T when the voxel V#1 is projected on the pixel P#1, and a display example of the projected image at the time T + 1 when the voxel V#1 is projected on the pixel P#2.
Fig. 30 is a diagram showing an example of projected image displayed on the display surface 11 when the display surface 11 tilted in the roll direction is viewed while being similarly tilted in the roll direction.
Fig. 31 is a diagram illustrating an example of generating the projected image when a user is moved in the horizontal direction.
Fig. 32 is a diagram further illustrating the example of generating the projected image when the user is moved in the horizontal direction.
Fig. 33 is a diagram showing a display example of the projected image at the time T when the voxel V#1 is projected on the pixel P#1, and a display example of the projected image at the time T + 1 when the voxel V#1 is projected on the pixel P#2.
Fig. 34 is a diagram illustrating an example of generating the projected image when the user is moved in the vertical direction.
Fig. 35 is a diagram further illustrating the example of generating the projected image when the user is moved in the vertical direction.
Fig. 36 is a diagram showing a display example of the projected image at the time T when the voxel V#1 is projected on the pixel P#1, and a display example of the projected image at the time T + 1 when the voxel V#1 is projected on the pixel P#2.
Fig. 37 is a diagram illustrating an example of generating the projected image when the user is moved a depth direction.
Fig. 38 is a diagram further illustrating the example of generating the projected image when the user is moved in the depth direction.
Fig. 39 is a diagram showing a display example of the projected image at the time T when the voxel V#1 is projected on the pixel P#1, and a display example of the projected image at the time T + 1 when the voxel V#1 is projected on the pixel P#2.
Fig. 40 is a diagram illustrating generation of the projected image when an image model of a 3D image is used.
Fig. 41 is a diagram illustrating an example of generating the projected image using a 3D image model when the user is moved in the horizontal direction.
Fig. 42 is a diagram illustrating an example of generating the projected image using the 3D image model when the user is moved in the vertical direction.
Fig. 43 is a diagram illustrating an example of generating the projected image using the 3D image model when the user is moved in the depth direction.
Fig. 44 is a diagram illustrating motion parallax to be provided to the projected image on the basis of a motion of the display surface 11 when the display surface 11 is moved by a camera shake.
Fig. 45 is a diagram illustrating an example of a method for generating a projected image including motion parallax on the basis of a motion of the display surface 11.
Fig. 46 is a diagram illustrating an enlargement of a difference in motion parallax.
Fig. 47 is a diagram illustrating another configuration example of the display surface 11.
Fig. 48 is a diagram illustrating an example of generating the projected image when the display surface 11 is a curved surface.
Fig. 49 is a diagram illustrating still further configuration example of the display surface 11.
Fig. 50 is a diagram illustrating an example of generating a projected image for a left eye and a projected image for a right eye.
Fig. 51 is a perspective view showing a configuration example of a second embodiment of an image display apparatus to which the present technology is applied.
Fig. 52 is a perspective view showing a configuration example of a third embodiment of an image display apparatus to which the present technology is applied.
Fig. 53 is a diagram illustrating a magnifying glass mode.
Fig. 54 is a block diagram showing a configuration example of one embodiment of a computer to which the present technology is applied.

### MODE FOR CARRYING OUT THE INVENTION

### <First embodiment of the image display apparatus to which the present technology is applied>

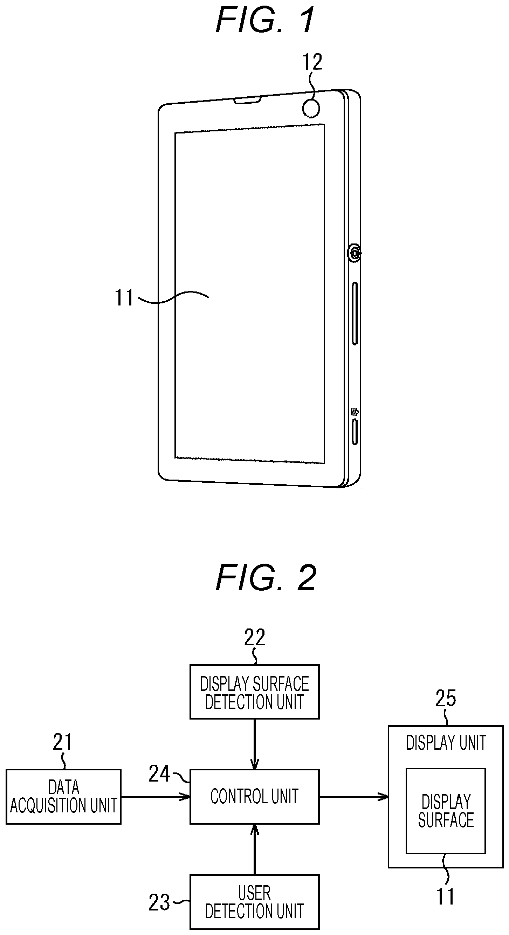

Fig. 1 is a perspective view showing a configuration example of one embodiment of the image display apparatus to which the present technology is applied.

Referring to Fig. 1, the image display apparatus is, for example, a smartphone (or a tablet), and a front surface of the image display apparatus is provided with a rectangular display surface 11 on which an image is displayed and a camera 12 that photographs an image.

Note that the display surface 11 displays, for example, an image, and is configured as a touch panel that receives a user's input (contact or approach).

Fig. 2 is a block diagram showing a functional configuration example of the smartphone as the image display apparatus shown in Fig. 1.

Referring to Fig. 2, the smartphone includes a data acquisition unit 21, a display surface detection unit 22, a user detection unit 23, a control unit 24, and a display unit 25.

The data acquisition unit 21 acquires data indicating a content of an image and supplies the data to the control unit 24.

Specifically, the data acquisition unit 21 has, for example, a recording (storage) medium built therein, and acquires the content data recorded in the recording medium by reading it out. For example, computer graphics data, animation data, data obtained by photographing using a digital (still/video) camera, and the like can be recorded in the recording medium.

Further, the data acquisition unit 21 is, for example, a network interface, and acquires the content data by downloading the content data from a server on a network such as the Internet.

Note that the content data acquired by the data acquisition unit 21 may be data indicating a still image, or may be data indicating a moving image.

Further, the content data acquired by the data acquisition unit 21 may be data indicating a 2D (Dimensional) image, or may be data indicating a 3D image.

Further, the data acquisition unit 21 can acquire content data including an image and sound (audio) attached to the image.

Further, in the data acquisition unit 21, data indicating an image photographed in real time by a camera (not shown) provided on the back surface of the smartphone, a camera (not shown) capable of establishing communication with the smartphone, or the like, can be acquired as content data to be supplied to the control unit 24.

The display surface detection unit 22 detects a position and a posture (inclination) of the display surface 11 of the display unit 25 of the smartphone, and supplies the position and the posture to the control unit 24 as display surface information. As the position and the posture of the display surface 11, for example, the position and the posture of the smartphone can be adopted.

As the display surface detection unit 22, a sensor built in a smartphone, for example, a sensor for detecting a motion, such as an acceleration sensor or a gyroscope, or a magnetic sensor for detecting a magnetic field, can be adopted. Further, as the display surface detection unit 22, for example, a Global Positioning System (GPS) can be adopted.

In this case, the position of the display surface 11 that is detected by the display surface detection unit 22 may be, for example, an absolute position, such as a latitude and a longitude obtained from a GPS, or may be a relative position based on the position of the display surface 11 at a certain timing.

Further, as the posture of the display surface 11 that is detected by the display surface detection unit 22, for example, one or more rotation angles in a pitch direction, a yaw direction, and a roll direction of the display surface 11 can be adopted.

Further, the display surface detection unit 22 can detect both of the position and the posture of the display surface 11, but instead may detect only the position of the display surface 11.

Further, the display surface detection unit 22 can detect, as the position of the display surface 11, all positions in the horizontal direction, the vertical direction, and the depth direction of the display surface 11 in a three-dimensional space, or can detect one or two positions in the horizontal direction, the vertical direction, and the depth direction of the display surface 11.

Similarly, the display surface detection unit 22 can detect, as the posture of the display surface 11, all rotation angles in the pitch direction, the yaw direction, and the roll direction of the display surface 11, or can detect one or two rotation angles in the pitch direction, the yaw direction, and the roll direction of the display surface 11.

Further, the accuracy of detecting the position and the posture of the display surface 11 in the display surface detection unit 22 is not particularly limited.

In this regard, however, the smartphone provides an image obtained by reproducing a scenery visible when a user views an image model, which is generated on the basis of content data, through the display surface 11 as a window on the basis of the position and the posture of the display surface 11. Accordingly, a factor for determining whether to detect both of the position and the posture of the display surface 11, or only the position of the display surface 11, affects the reproducibility (so-called a window-like property of the display surface 11) of the image provided by the smartphone.

As the position of the display surface 11, factors, such as, which one of the positions in the horizontal direction, the vertical direction, and the depth direction of the display surface 11 is detected, which one of the rotation angles in the pitch direction, the yaw direction, and the roll direction of the display surface 11 is detected as the posture of the display surface 11, and the accuracy of detecting the position and the posture of the display surface 11 affect the reproducibility of the image provided by the smartphone.

The user detection unit 23 detects a position of the user, and supplies the position to the control unit 24 as user position information.

As the user position detection unit 23, for example, the camera 12 (Fig. 1) which is provided on the front surface of the smartphone can be adopted. In this case, in the user position detection unit 23, the position of the user on the basis of the position of the smartphone can be detected on the basis of the image of the user that is photographed by the camera 12.

The control unit 24 is, for example, a display control apparatus that is configured as a Central Processing Unit (CPU) or a Graphics Processing Unit (GPU) of the smartphone and controls the display of an image. The control unit 24 generates an image model on the basis of the data indicating the content of the image supplied from the data acquisition unit 21.

In this case, the image model is formed of (a set of) voxels and each voxel is used as a component. Each voxel includes information indicating a color and a position, and the content of the image is formed by arranging the color included in the voxel at the position included in the voxel.

The control unit 24 generates an image model, generates a projected image to be displayed on the display surface 11 of the display unit 25 on the basis of the image model, the position and the posture of the display surface 11 represented by the display surface information supplied from the display surface detection unit 22, the position of the user represented by the user position information supplied from the user detection unit 23, or the like, and controls the display unit 25 to display the projected image.

Specifically, the control unit 24 (virtually) arranges the display surface 11 with a posture represented by the display surface information at (apositioncorrespondingto)aposition represented by the display surface information in a predetermined reference coordinate system, and (virtually) arranges (the point-of-view of) the user at (a position corresponding to) a position represented by the user position information in the reference coordinate system.

Further, the control unit 24 arranges the image model at a predetermined position (for example, a position on the back side of the display surface 11 when viewed from the user in the reference coordinate system, or a position surrounding the user and the display surface 11) in the reference coordinate system.

Then, the control unit 24 generates a projected image obtained by projecting the image model on (each pixel) of the display surface 11 along a straight line passing through the position (point-of-view) of the user and each pixel of the display surface 11 in the reference coordinate system, supplies the projected image to the display unit 25, and displays the projected image on the display surface 11.

The display unit 25 is, for example, a display apparatus that displays an image, such as a touch panel of a smartphone, and displays the projected image in accordance with the control of the control unit 24.

In this case, in the display unit 25, the surface on which the projected image is displayed is the display surface 11. When the display unit 25 is, for example, a touch panel as described above, the touch panel and the display surface 11 are integrally formed. Accordingly, the display surface detection unit 22 can detect the position and the posture of the display surface 11 by detecting the position and the posture of the touch panel, which is the display unit 25, and by further detecting the position and the posture of the smartphone integrally formed with the touch panel.

Note that the control unit 24 can generate the projected image without using the user position information supplied from the user position detection unit 23.

When the projected image is generated without using the user position information supplied from the user position detection unit 23, the control unit 24 can generate the projected image by arranging the user at a predetermined position opposed to the display surface 11 (for example, a position at a predetermined distance from the center of the display surface on a straight line that is orthogonal to the display surface 11 and passes through the center (center of mass) of the display surface 11) in the reference coordinate system.

When the control unit 24 generates the projected image without using the user position information supplied from the user position detection unit 23, the smartphone can be configured without providing the user position detection unit 23.

Further, when the display surface detection unit 22 detects only the position of the display surface 11 and does not detect the posture of the display surface 11, the control unit 24 can arrange the display surface 11 in the reference coordinate system by using, for example, a predetermined default posture as the posture of the display surface 11.

Further, when the display surface detection unit 22 does not detect one or two positions in the horizontal direction, the vertical direction, and the depth direction as the position of the display surface 11, the control unit 24 can arrange the display surface 11 in the reference coordinate systemusing a predetermined default position as the position in the direction that is not detected.

The same applies to a case where the user position detection unit 23 does not detect one or two positions in the horizontal direction, the vertical direction, and the depth direction as the position of the user.

### <Configuration example of the control unit 24>

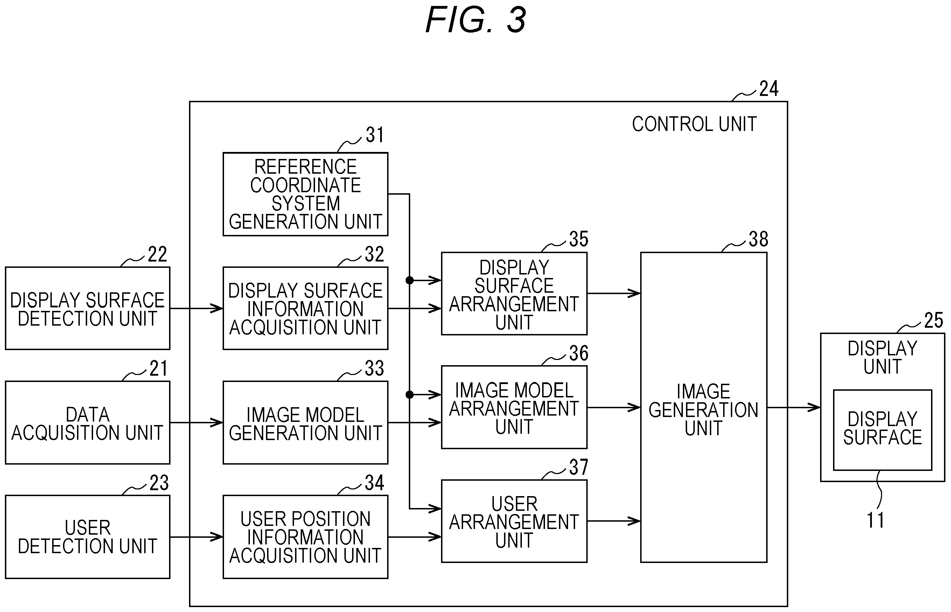

Fig. 3 is a block diagram showing a configuration example of the control unit 24 shown in Fig. 2.

Referring to Fig. 3, the control unit 24 includes a reference coordinate system generation unit 31, a display surface information acquisition unit 32, an image model generation unit 33, a user position information acquisition unit 34, a display surface arrangement unit 35, an image model arrangement unit 36, a user arrangement unit 37, and an image generation unit 38.

The reference coordinate system generation unit 31 generates a predetermined three-dimensional coordinate system as the reference coordinate system, and supplies the predetermined three-dimensional coordinate system to the display surface arrangement unit 35, the image model arrangement unit 36, and the user arrangement unit 37.

The reference coordinate system generation unit 31 generates, as the reference coordinate system, a three-dimensional coordinate system or the like in which a xy plane is parallel to the display surface 11 at a predetermined timing (hereinafter referred to also as a default timing), for example, when the user operates the smartphone to display the projected image.

The display surface information acquisition unit 32 acquires the display surface information from the display surface detection unit 22, and supplies the display surface information to the display surface arrangement unit 35. In this case, the display surface information can include the shape of the display surface 11, as needed, in addition to the position and the posture of the display surface 11.

The image model generation unit 33 is supplied with content data from the data acquisition unit 21. The image model generation unit 33 analyzes the content data from the data acquisition unit 21, identifies whether the content data is, for example, a 2D image or a 3D image, and generates an image model corresponding to the content data.

Then, the image model generation unit 33 supplies the image model to the image model arrangement unit 36.

The user position information acquisition unit 34 acquires the user position information from the user detection unit 23, and supplies the acquired user position information to the user arrangement unit 37.

The display surface arrangement unit 35 (virtually) arranges the display surface 11 on the reference coordinate system from the reference coordinate system generation unit 31 on the basis of the display surface information from the display surface information acquisition unit 32, and supplies the arrangement result to the image generation unit 38.

Specifically, the display surface arrangement unit 35 arranges the display surface 11 with the posture represented by the display surface information at (the position corresponding to) the position represented by the display surface information in the reference coordinate system.

Note that in this embodiment, at the default timing, the display surface 11 is arranged on the reference coordinate system in such a manner that the display surface 11 is parallel to the xy plane of the reference coordinate system.

Further, to simplify the explanation, assume herein that the display surface 11 is, for example, a rectangular surface, and at the default timing, the user has one of a long side and a short side of the rectangular display surface 11 with, for example, the long side facing in the horizontal direction. Also assume that the reference coordinate system is arranged in such a manner that, for example, the long side of the display surface 11 is parallel to an x-axis and the short side, i.e., the other side of the display surface, is parallel to a y-axis.

At the default timing, the image model arrangement unit 36 (virtually) arranges the image model supplied from the image model generation unit 33 on the reference coordinate system from the reference coordinate system generation unit 31, and supplies the arrangement result to the image generation unit 38.

Specifically, at the default timing, the image model arrangement unit 36 arranges the image model at a predetermined position, such as a position on the back side of the display surface 11 when viewed from the user in the reference coordinate system, or a position surrounding the user and the display surface 11.

The user arrangement unit 37 (virtually) arranges (the point-of-view of) the user on the reference coordinate system from the reference coordinate system generation unit 31 on the basis of the user position information from the user position information acquisition unit 34, and supplies the arrangement result to the image generation unit 38.

Specifically, the user arrangement unit 37 arranges the user at (the position corresponding to) the position represented by the user position information in the reference coordinate system.

The image generation unit 38 generates, as the projected image to be displayed on the display surface 11, an image obtained by reproducing a scenery visible when the user views the image model through the display surface 11 as a window on the basis of the arrangement result from the display surface arrangement unit 35 to the reference coordinate system of the display surface 11, the arrangement result from the image model arrangement unit 36 to the reference coordinate system of the image model, and the arrangement result from the user arrangement unit 37 to the reference coordinate system of the user, and supplies the image to the display unit 25.

Specifically, the image generation unit 38 generates the projected image obtained by projecting the image model on (each pixel of) the display surface 11 along a straight line passing through the position (point-of-view) of the user and each pixel of the display surface 11 in the reference coordinate system.

More specifically, assuming that a certain pixel of the display surface 11 in the reference coordinate system is a pixel of interest, the image generation unit 38 detects, as an intersecting voxel, the voxel at the position of the image model that intersects with a straight line passing through the user and the pixel of interest in the reference coordinate system.

Further, the image generation unit 38 adopts the color included in the intersecting voxel as the pixel value of the pixel of interest, and performs the above-describedprocessing on all pixels of the display surface 11 in the reference coordinate system as the pixel of interest, thereby generating the projected image obtained by projecting a part or the whole of the image model in the reference coordinate system on the display surface 11.

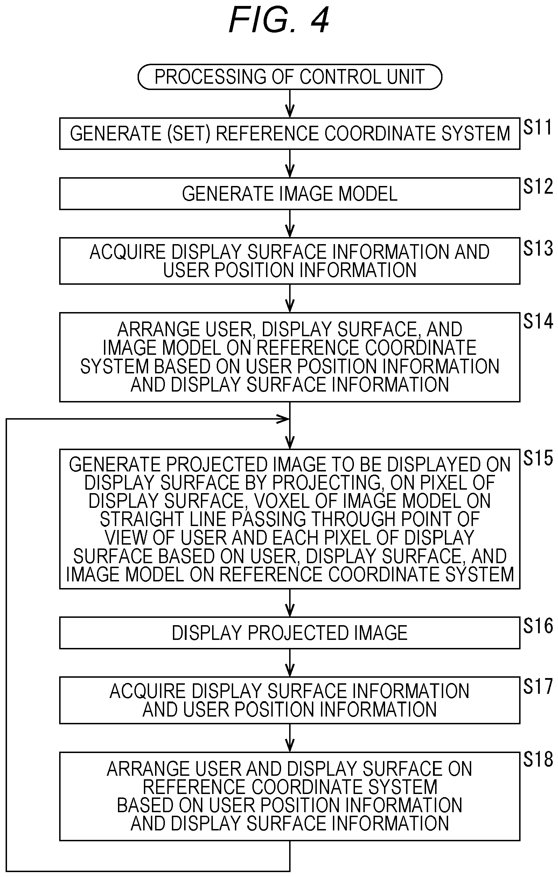

Fig. 4 is a flowchart illustrating an example of the processing of the control unit 24 shown in Fig. 3.

In step S11, the reference coordinate system generation unit 31 generates the reference coordinate system, and supplies the reference coordinate system to the display surface arrangement unit 35, the image model arrangement unit 36, and the user arrangement unit 37. Then, the processing proceeds to step S12.

In step S12, the image model generation unit 33 generates the image model corresponding to the content data supplied from the data acquisition unit 21 on the basis of the data indicating the content, and supplies the image model to the image model arrangement unit 36. Then, the processing proceeds to step S13.

In step S13, the display surface information acquisition unit 32 acquires the display surface information from the display surface detection unit 22 and supplies the display surface information to the display surface arrangement unit 35, and the user position information acquisition unit 34 acquires the user position information from the user detection unit 23 and supplies the user position information to the user arrangement unit 37. Then, the processing proceeds to step S14.

In step S14, the display surface arrangement unit 35 arranges the display surface 11 on the reference coordinate system from the reference coordinate system generation unit 31 on the basis of the display surface information from the display surface information acquisition unit 32, and supplies the arrangement result to the image generation unit 38.

Further, in step S14, the user arrangement unit 37 arranges the user on the reference coordinate system from the reference coordinate system generation unit 31 on the basis of the user position information from the user position information acquisition unit 34, and supplies the arrangement result to the image generation unit 38.

Further, in step S14, the image model arrangement unit 36 arranges the image model at a predetermined position such as a position on the back side of the display surface 11, for example, as viewed from the user in the reference coordinate system. Then, the processing proceeds to step S15.

In step S15, the image generation unit 38 generates the projected image obtained by projecting the image model on each pixel of the display surface 11 along a straight line passing through the position (point-of-view) of the user and each pixel of the display surface 11 in the reference coordinate system on the basis of the arrangement result from the display surface arrangement unit 35 to the reference coordinate system of the display surface 11, the arrangement result from the image model arrangement unit 36 to the reference coordinate system of the image model, and the arrangement result from the user arrangement unit 37 to the reference coordinate system of the user. Then, the processing proceeds to step S16.

In step S16, the image generation unit 38 supplies the projected image to the display unit 25 and displays the projected image on the display surface 11. Then, the processing proceeds to step S17.

In step S17, like in step S13, the display surface information acquisition unit 32 acquires the display surface information from the display surface detection unit 22 and supplies the display surface information to the display surface arrangement unit 35, and the user position information acquisition unit 34 acquires the user position information from the user detection unit 23 and supplies the user position information to the user arrangement unit 37. Then, the processing proceeds to step S18.

In step S18, the display surface arrangement unit 35 arranges the display surface 11 on the reference coordinate system from the reference coordinate system generation unit 31 on the basis of the display surface information from the display surface information acquisition unit 32 and supplies the arrangement result to the image generation unit 38, and the user arrangement unit 37 arranges the user on the reference coordinate system from the reference coordinate system generation unit 31 on the basis of the user position information from the user position information acquisition unit 34 and supplies the arrangement result to the image generation unit 38.

Then, the processing returns to step S15, and the same processing is repeated thereafter.

### <Principle of generating the projected image>

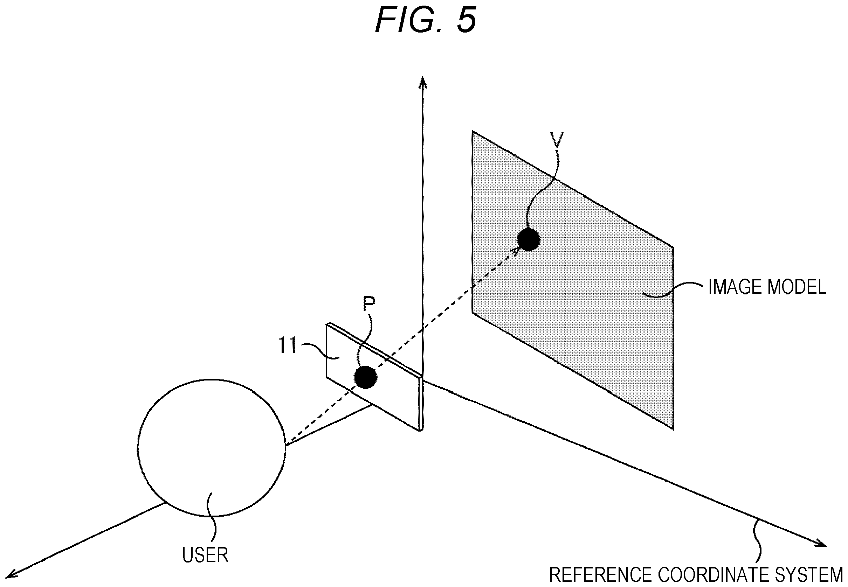

Fig. 5 is a diagram illustrating the principle of generating the projected image by the image generation unit 38 shown in Fig. 3.

Referring to Fig. 5, the user, the display surface 11, and the image model are arranged on the reference coordinate system on the basis of the display surface information and the user position information.

Assuming herein that a certain pixel P of the display surface 11 in the reference coordinate system is an pixel of interest P, the image generation unit 38 detects, as an intersecting voxel V, a voxel V at the position of the image model that intersects with a straight line (indicated by a dotted arrow in Fig. 5) passing through the user and the pixel of interest P in the reference coordinate system.

Further, the image generation unit 38 adopts the color included in the intersecting voxel V as the pixel value of the pixel of interest P, thereby allowing the intersecting voxel V to be projected on the pixel of interest P.

Then, the image generation unit 38 performs the same processing on all pixels of the display surface 11 in the reference coordinate system as the pixel of interest, thereby generating the projected image to be displayed on the display surface 11.

Note that, when a plurality of voxels are present as intersecting voxels that intersect with the straight line passing through the user and the pixel of interest P, the color included in the intersecting voxel at the frontmost side (as viewed from the user) among the plurality of intersecting voxels is adopted as the pixel value of the pixel of interest P.

However, even in the case where a plurality of voxels are present as intersecting voxels, when the color included in the intersecting voxel at the frontmost side is a transparent color, a color obtained by superimposing the color included in the intersecting voxel at the frontmost side and the color included in the second (back side) intersecting voxel counted from the front side according to the transparency is adopted as the pixel value of the pixel of interest P. The same applies to a case where the color included in the intersecting voxels subsequent to the second intersecting voxel counted from the front has transparency.

Further, in some cases, there is no voxel at the position (hereinafter referredto also as amodel intersectingposition) of the image model intersecting with the straight line passing through the user and the pixel of interest P in the reference coordinate system, that is, the model intersecting position deviates from the voxel position.

In this case, the image generation unit 38 can detect, for example, the voxel located closest to the model intersectingposition, as the intersectingvoxel, andcanadopt the color included in the intersecting voxel as the pixel value of the pixel of interest P.

Alternatively, the image generation unit 38 can detect, for example, a plurality of frontmost voxels, which are located in proximity or adjacent to the model intersecting position, as candidate voxels which are candidates for the intersecting voxel, and can generate the intersecting voxel at the model intersecting position by interpolation (interpolation or extrapolation) using the plurality of candidate voxels. In this case, as the color included in the intersecting voxel, a combination color obtained by combining the colors included in the respective candidate voxels according to the distance between the model intersecting position and each candidate voxel is generated. As a result, the combination color is adopted as the pixel value of the pixel of interest P.

As described above, the user, the display surface 11, and the image model are arranged on the reference coordinate system on the basis of the display surface information and the user position information, and the projected image is generated by projecting the image model on the pixel P of the display surface 11 along a straight line passing through the user and the pixel P of the display surface 11 in the reference coordinate system, thereby allowing the user to obtain, as the projected image, the image obtained by reproducing the scenery visible when the image model is viewed through the display surface 11 as a window.

Accordingly, when the user views the projected image displayed on the display surface 11, the image projected on the retina of the user is an image similar (identical or analogous) to the image projected on the retina of the user when the user views the image model through the display surface 11 as a window. Thus, the user can enjoy feeling as if the image model were oriented in front of the eyes of the user and the user were viewing the image model through the display surface 11 as a window.

In this case, as described above, the projected image to be displayed on the display surface 11 is an image obtained by reproducing a scenery visible when the user views the image model through the display surface 11 as a window. Accordingly, when the projected image is generated using an image model obtained from (the content of) an image of a scenery at a certain location A where the image is photographed by, for example, a photographing apparatus for photographing an image (the image model is hereinafter referred to also as the image model at the location A), thereby allowing the user to enjoy feeling as if the user were at the location A, without the need to actually go to the location A.

Further, the projected image can be generated on the basis of the position (absolute position) and the posture of the photographing apparatus at the time of photographing at the location A by the photographing apparatus.

Specifically, the projected image using the image model at the location A can be generated when the user who has the smartphone with him/her is actually located at the location A.

Then, the generation of the projected image using the image model at the location A can be performed by arranging the image model at the location A on the reference coordinate system in such a manner that the scenery obtained during photographing at the location A is reproduced on the basis of the position and the posture of the photographing apparatus during photographing at the location A.

In this case, the user can experience a so-called window of time, or a time machine, through which a scenery in the past at the location A is viewed through the display surface 11 as a window at the location A.

In other words, the user located at the location A can actually view the present scenery at the location A.

Further, when the user is located at the location A, the generation of the projected image using the image model at the location A is performed by arranging the image model at the location A on the reference coordinate system in such a manner that the scenery in the past obtained during photographing at the location A is reproduced. Accordingly, for example, if the user directs the smartphone in a certain direction B at the location A, the scenery in the past in the direction B, which is obtained when the location A is photographed by the photographing apparatus, is displayed as the projected image on the display surface 11 of the smartphone.

Thus, the user can view, as the projected image displayed on the display surface 11 as a window, the scenery in the past in the direction B that is supposed to be viewed if the user is actually located at the location A during photographing at the location A by the photographing apparatus.

Therefore, the user can view the present scenery in the direction B at the location A as the actual scenery, and can enjoy feeling as if the user were viewing the scenery in the past in the direction B at the location A through the display surface 11 as a window.

### <Examples of the image model>

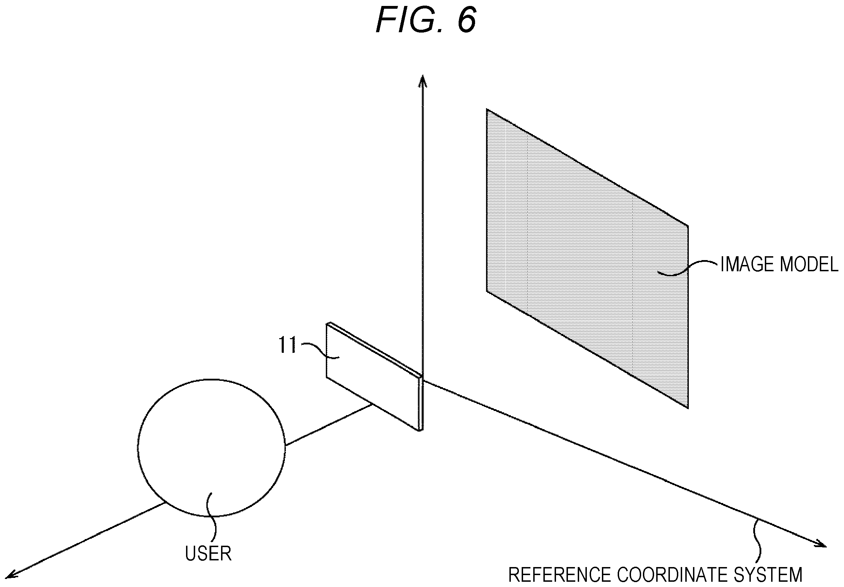

Fig. 6 is a diagram showing a first example of the image model.

The image model is composed of voxels each including information about a position and a color, and is capable of representing an image of a structure of any shape.

Fig. 6 shows an example of the image model of a 2D image. The image model of the 2D image has, for example, a rectangular (planar) structure. Each voxel of the image model of the 2D image includes, as positional information, information about positions in the horizontal direction and the vertical direction.

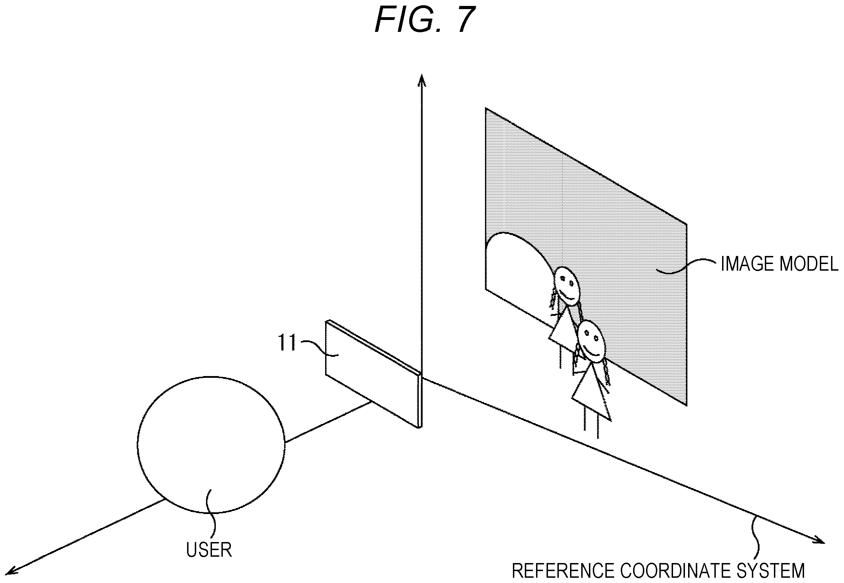

Fig. 7 is a diagram showing a second example of the image model.

Fig. 7 shows an example of the image model of a 3D image. The image model of the 3D image includes a complicated structure that extends in the horizontal direction, the vertical direction, and the depth direction. Accordingly, each voxel of the image model of the 3D image includes, as positional information, information about positions in the horizontal direction, the vertical direction, and the depth direction.

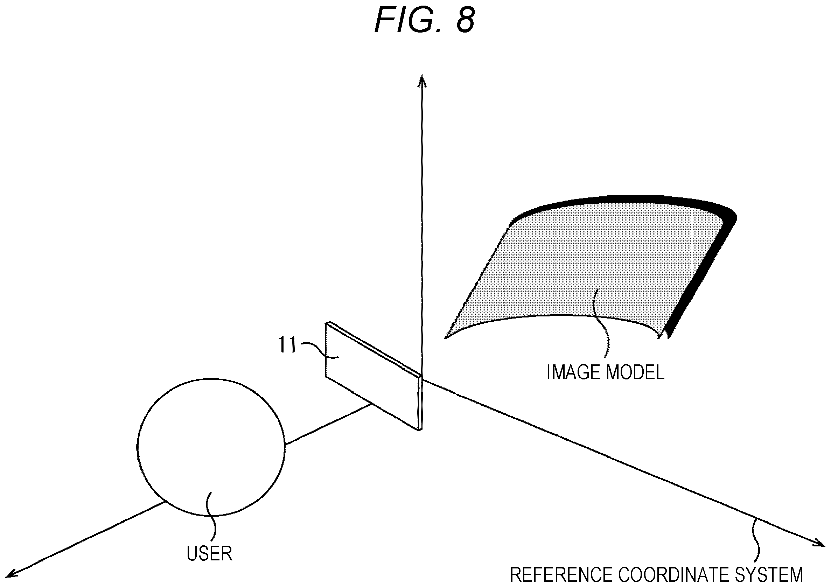

Fig. 8 is a diagram showing a third example of the image model.

The image model shown in Fig. 8 has a structure with a curved rectangular surface.

As the structure of the image model, not only the structures shown in Figs. 6 and 8, but also any structure, such as a sphere, can be adopted.

### <Specific examples of the projected image>

Hereinafter, a specific example of the projected image generated when the display surface 11 is moved (in parallel) (translated) to each of the horizontal direction, the vertical direction, and the depth direction, a specific example of the projected image generated when the display surface 11 is rotated in each of the pitch direction, the yaw direction, and the roll direction, and a specific example of the projected image generated when the user is moved in each of the horizontal direction, the vertical direction, and the depth direction will be described.

Note that, to facilitate the explanation, a specific example of generating the projected image when the display surface 11 is moved in each of the horizontal direction, the vertical direction, and the depth direction, a specific example of generating the projected image when the display surface 11 is rotated in each of the pitch direction, the yaw direction, and the roll direction, and a specific example of generating the projected image when the user is moved in each of the horizontal direction, the vertical direction, and the depth direction will be described separately. However, the projected image can be generated for any combination of these movements and rotations.

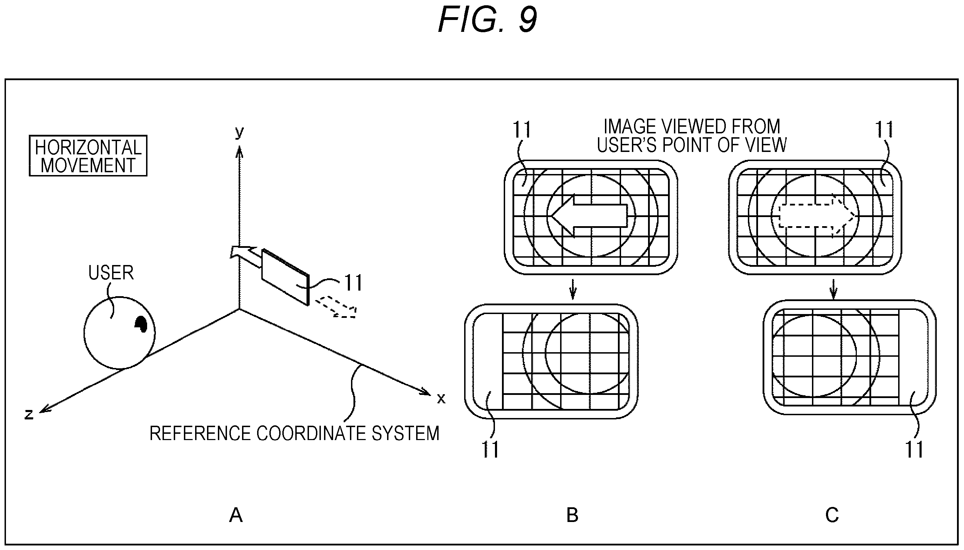

Fig. 9 is a diagram illustrating an example of generating the projected image when the display surface 11 is moved in the horizontal direction.

Note that hereinafter, assume that the display surface 11 and the user are moved from, for example, the state at the default timing.

Also assume that the reference coordinate system is a three-dimensional coordinate system in which, for example, the left-to-right direction in the long-side direction of the display surface 11 at the default timing is defined as an x-axis; the bottom-to-top direction in the short-side direction of the display surface 11 is defined as a y-axis; and the direction that is orthogonal to the display surface 11 and opposed to the display surface 11 is defined as a z-axis.

Further, assume that at the initial timing, in the reference coordinate system, the user is arranged on a side opposed to the display surface 11, for example, on a straight line passing through the center of the display surface 11, and that the horizontal direction, the vertical direction, and the depth direction of each of the user and the display surface 11 are directions respectively parallel to the x-axis, the y-axis, and the z-axis of the reference coordinate system.

Further, for example, an image model of a still image of a 2D image is adopted as the image model.

A of Fig. 9 shows an example of arranging the display surface 11 and the user in the reference coordinate system at the default timing.

When the display surface 11 is moved in the horizontal direction, the user moves the display surface 11 leftward as indicated by a thick solid arrow in A of Fig. 9, without changing the posture thereof, within a plane (plane parallel to the xy plane) including the display surface 11 at the default timing, or moves the display surface 11 rightward as indicated by a thick dotted arrow in A of Fig. 9.

B of Fig. 9 shows the projected image generated before the movement (at the default timing) and the projected image generated after the movement, when the display surface 11 is moved leftward.

In B of Fig. 9, before the movement of the display surface 11, in accordance with the principle described above with reference to Fig. 5, the projected image is generated as if the display surface 11 serving as a window were right in front of the user and the user were viewing the image model of the still image through the window.

Then, after the display surface 11 is moved leftward, in accordance with the principle described above with reference to Fig. 5, the projected image is generated as if the display surface 11 serving as a window were on the left side of the front of the user and the user were viewing the image model of the still image through the window.

In other words, the projected image is generated in such a manner that, even when the display surface 11 is moved leftward, the image model of the still image present on the opposite side (back side) of the display surface 11 as a window remains on the spot, and when the window is moved, the range in which the image model is visible seems to be changed to a range on the left side from the position before the movement.

C of Fig. 9 shows projected images generated before and after the display surface 11 is moved rightward.

The projected image is generated in such a manner that, when the display surface 11 is moved rightward, the image model of the still image present at the opposite side of the display surface 11 as a window remains on the spot, and when the window is moved, the range in which the image model is visible seems to be changed to a range on the right side from the position before the movement.

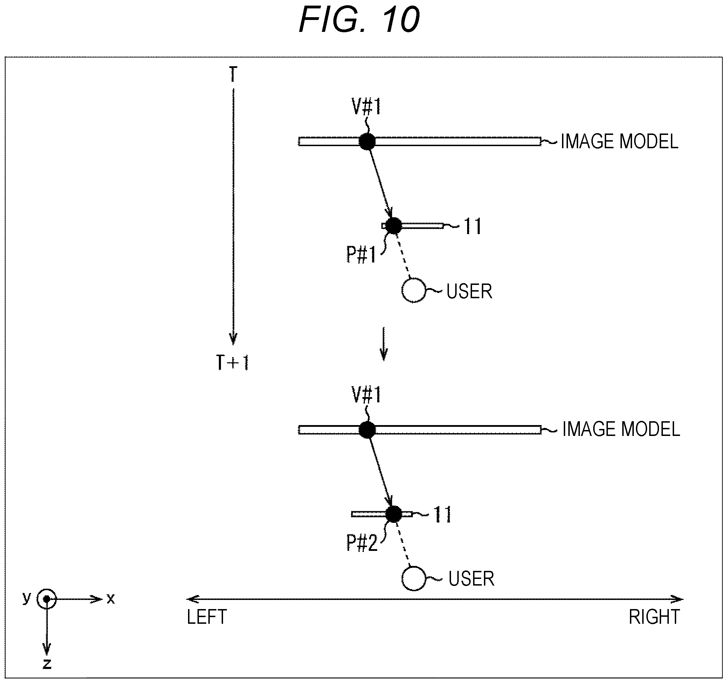

Fig. 10 is a diagram further illustrating the example of generating the projected image when the display surface 11 is moved in the horizontal direction.

Fig. 10 is a view showing the reference coordinate system as viewed in the positive direction of the y-axis. The left-to-right direction, the direction perpendicular to the drawing sheet, and the top-to-bottom direction respectively correspond to the x-axis, the y-axis, and the z-axis of the reference coordinate system.

Referring to Fig. 10, at a time T, the display surface 11 located right in front of the user is moved to the left in front of the user at a time T + 1.

Note that in Fig. 10, before and after the movement of the display surface 11, the display surface 11 and the image model (of the still image of the 2D image) are parallel to the xy plane.

A certain voxel V#1 of the image model is projected on a pixel P#1 on the left side of the display surface 11 at the time T before the movement of the display surface 11. At the time T + 1 after the display surface 11 is moved to the left, the voxel is projected on a pixel P#2 on the right side of the display surface 11.

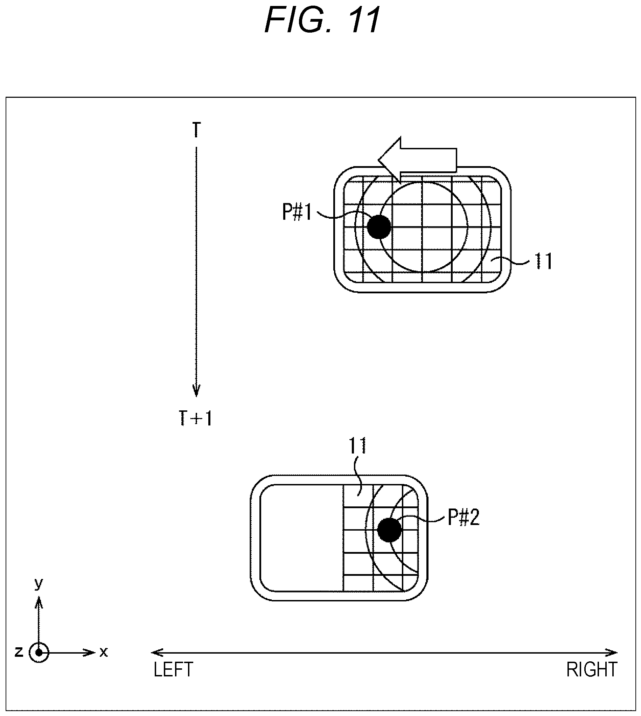

Fig. 11 is a diagram showing a display example of the projected image at the time T when the voxel V#1 shown in Fig. 10 is projected on the pixel P#1, and a display example of the projected image at the time T + 1 when the voxel V#1 is projected on the pixel P#2.

The voxel V#1 of the image model looks like the pixel P#1 on the left side of the display surface 11 as a window at the time T before the movement of the display surface 11, and the voxel V#1 of the image model looks like looks like the pixel P#2 on the right side of the display surface 11 as a window at the time T + 1 after the display surface 11 is moved to the left.

As a result, the user can enjoy feeling as if the image model were oriented in front of the eyes of the user and the range of the image model viewed through the display surface 11 as a window were changed by the movement of the window to the left.

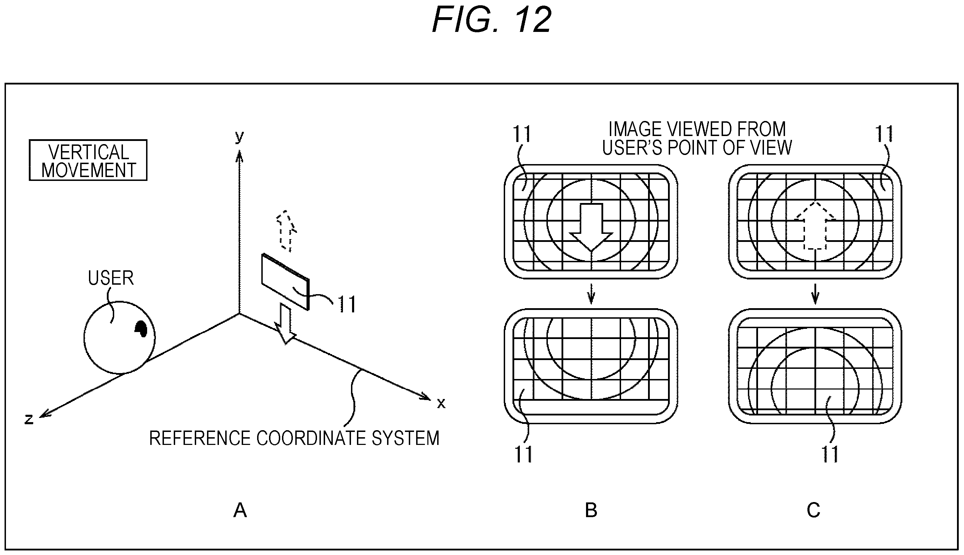

Fig. 12 is a diagram illustrating an example of generating the projected image when the display surface 11 is moved in the vertical direction.

A of Fig. 12 shows an example of arranging the display surface 11 and the user in the reference coordinate system at the default timing.

When the display surface 11 is moved in the vertical direction, the user moves the display surface 11 downward, without changing the posture thereof, within a plane (plane parallel to the xy plane) including the display surface 11 at the default timing, as indicated by a thick solid arrow in A of Fig. 12, or moves the display surface 11 upward as indicated by a thick dotted arrow in A of Fig. 12.

B of Fig. 12 shows the projected image generated before the movement (at the default timing) and the projected image generated after the movement when the display surface 11 is moved downward.

In B of Fig. 12, before the movement of the display surface 11, in accordance with the principle described above with reference to Fig. 5, the projected image is generated as if the display surface 11 serving as a window were right in front of the user and the user were viewing the image model of the still image through the window.

Then, after the display surface 11 is moved downward, in accordance with the principle described above with reference to Fig. 5, the projected image is generated as if the display surface 11 serving as a window were below the front of the user and the user were viewing the image model of the still image through the window.

In other words, the projected image is generated in such a manner that, even when the display surface 11 is moved downward, the image model of the still image present on the opposite side (back side) of the display surface 11 as a window remains on the spot, and when the window is moved, the range in which the image model is visible seems to be changed to a range on the lower side from the position before the movement.

C of Fig. 12 shows projected images generated before and after the display surface 11 is moved upward.

The projected image is generated in such a manner that, even when the display surface 11 is moved upward, the image model of the still image present on the opposite side of the display surface 11 as a window remains on the spot, and when the window is moved, the range in which the image model is visible seems to be changed to a range on the upper side from the position before the movement.

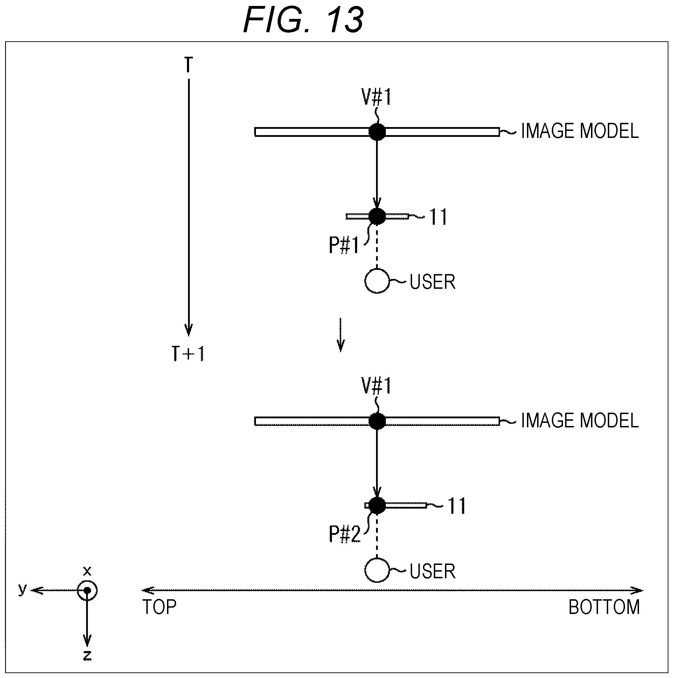

Fig. 13 is a diagram further illustrating the example of generating the projected image when the display surface 11 is moved in the vertical direction.

Fig. 13 is a view showing the reference coordinate system as viewed in the positive direction of the x-axis. The direction perpendicular to the drawing sheet, the right-to-left direction, and the top-to-bottom direction respectively correspond to the x-axis, the y-axis, and the z-axis of the reference coordinate system.

Referring to Fig. 13, at the time T, the display surface 11 located right in front of the user is moved downward in front of the user at the time T + 1.

Note that in Fig. 13, before and after the movement of the display surface 11, the display surface 11 and the image model (of the still image of the 2D image) are parallel to the xy plane.

A certain voxel V#1 of the image model is projected on the pixel P#1 in the vicinity of the center in the vertical direction of the display surface 11 at the time T before the movement of the display surface 11, and the voxel V#1 is projected on the pixel P#2 on the upper side of the display surface 11 at the time T + 1 after the display surface 11 is moved downward.

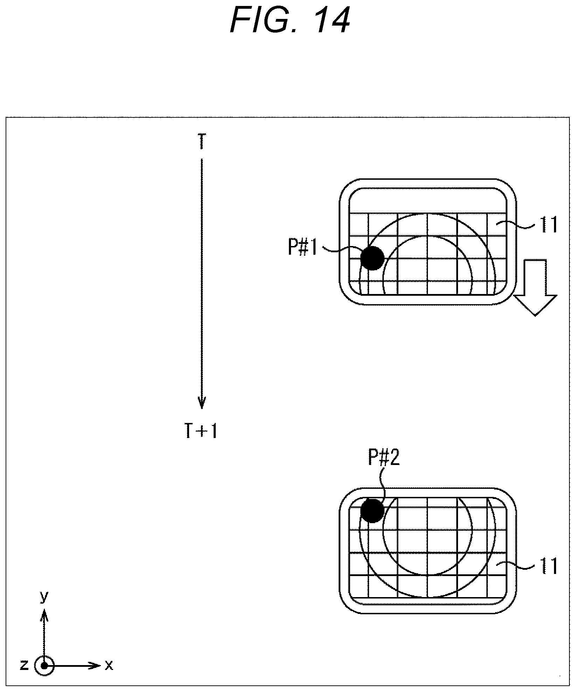

Fig. 14 is a diagram showing a display example of the projected image at the time T when the voxel V#1 shown in Fig. 13 is projected on the pixel P#1, and a display example of the projected image at the time T + 1 when the voxel V#1 is projected on the pixel P#2.

The voxel V#1 of the image model looks like the pixel P#1 in the vicinity of the center in the vertical direction of the display surface 11 as a window at the time T before the movement of the display surface 11, and the voxel V#1 looks like the pixel P#2 on the display surface 11 as a window at the time T + 1 after the display surface 11 is moved downward.

As a result, the user can enjoy feeling as if the image model were oriented in front of the eyes of the user and the range of the image model viewed through the display surface 11 as a window were changed by moving the window downward.

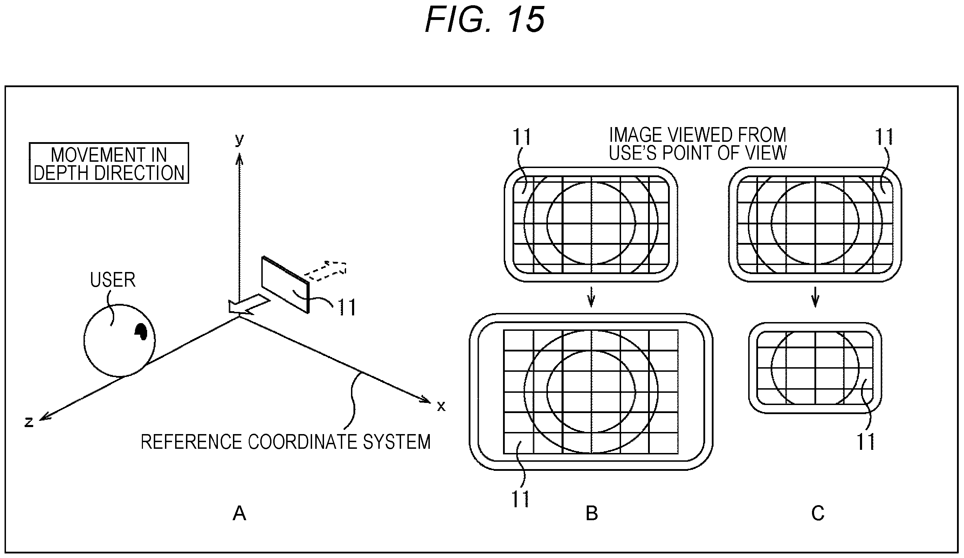

Fig. 15 is a diagram illustrating an example of generating the projected image when the display surface 11 is moved in the depth direction.

A of Fig. 15 shows an example of arranging the display surface 11 and the user on the reference coordinate system at the default timing.

When the display surface 11 is moved in the depth direction, the user moves the display surface 11 in the front direction (to the front side as viewed from the user) as indicated by a thick solid arrow in Fig. 15 in a direction orthogonal to the display surface 11 (in the z-axis direction) at the default timing, without changing the posture, or moves the display surface 11 in the depth direction (to the back side as viewed from the user) as indicated by a thick dotted arrow in A of Fig. 15.

B of Fig. 15 shows the projected image generated before the movement (at the default timing) and the projected image generated after the movement when the display surface 11 is moved in the front direction.

In B of Fig. 15, before the movement of the display surface 11, in accordance with the principle described above with reference to Fig. 5, the projected image is generated as if the user were viewing the image model of the still image through the display surface 11 as a window right in front of the user.

Then, after the display surface 11 is moved in the front direction, in accordance with the principle described above with reference to Fig. 5, the projected image is generated as if the user were viewing the image model of the still image through the display surface 11 as a window at the front side rather than right in front of the user.

Specifically, the projected image is generated in such a manner that, even when the display surface 11 is moved in the front direction, the image model of the still image present on the opposite side (back side) of the display surface 11 as a window remains on the spot, and when the window is moved, the range in which the image model is visible seems to be changed to a wider range than that before the movement.

C of Fig. 15 shows the projected images generated before and after the display surface 11 is moved in the depth direction.

The projected image is generated in such a manner that, when the display surface 11 is moved in the depth direction, the image model of the still image present on the opposite side of the display surface 11 as a window remains on the spot, and when the window is moved, the range in which the image model is visible seems to be changed to a narrower range than that before the movement.

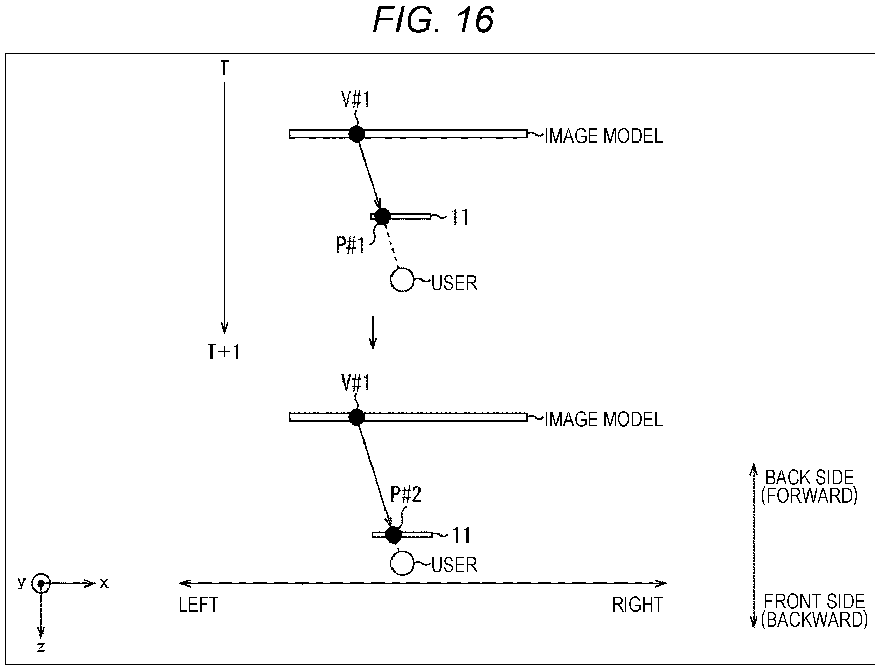

Fig. 16 is a diagram further illustrating the example of generating the projected image when the display surface 11 is moved in the depth direction.

Fig. 16 is a view showing the reference coordinate system as viewed in the positive direction of the y-axis. The left-to-right direction, the direction perpendicular to the drawing sheet, and the top-to-bottom direction respectively correspond to the x-axis, the y-axis, and the z-axis of the reference coordinate system.

In Fig. 16, at the time T, the display surface 11 located right in front of the user is moved to the front side rather than right in front of the user at the time T + 1.

Note that in Fig. 16, before and after the movement of the display surface 11, the display surface 11 and the image model (of the still image of the 2D image) is parallel to the xy plane.

A certain voxel V#1 of the image model is projected on the pixel P#1 on the left side far from the center of the display surface 11 at the time T before the movement of the display surface 11, and the voxel V#1 is projected on the pixel P#2 on the left side near the center of the display surface 11 at the time T + 1 after the display surface 11 is moved to the front side.

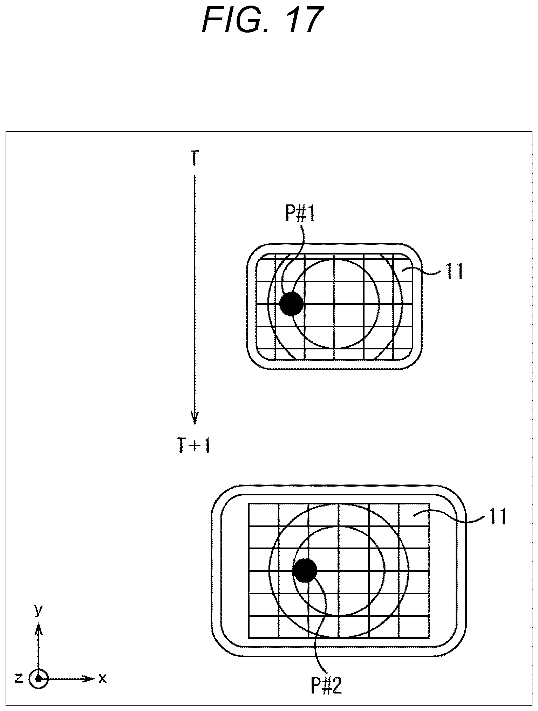

Fig. 17 shows a display example of the projected image at the time T when the voxel V#1 shown in Fig. 16 is projected on the pixel P#1, and a display example of the projected image at the time T + 1 when the voxel V#1 is projected on the pixel P#2.

The voxel V#1 of the image model looks like the pixel P#1 on the left side far from the center of the display surface 11 as a window at the time T before the movement of the display surface 11, and the voxel V#1 looks like the pixel P#2 on the left side near the center of the display surface 11 as a window at the time T + 1 after the display surface 11 is moved to the front side.

As a result, the user can enjoy feeling as if the image model were oriented in front of the eyes of the user and the range of the image model viewed through the display surface 11 as a window were changed by the movement of the window to the front side.

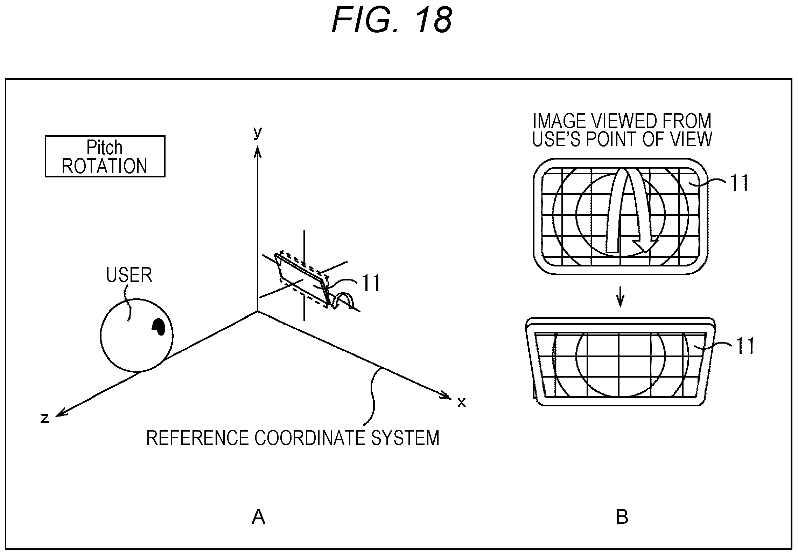

Fig. 18 is a diagram illustrating an example of generating the projected image when the display surface 11 is rotated and tilted in the pitch direction.

A of Fig. 18 shows an example of arranging the user and the display surface 11 on the reference coordinate system at the default timing.

In the rotation in the pitch direction of the display surface 11 (rotation about the x-axis), the display surface 11 is rotated tilted, by the user, in a direction indicated by a thick solid arrow in A of Fig. 18, or in the direction opposite to the direction, with a straight line parallel to the x-axis passing through the center of the display surface 11 at the default timing, for example, as a rotation axis, without changing the position of the display surface.

B of Fig. 18 shows the projected image generated before the display surface 11 is tilted (at the default timing), and the projected image generated after the display surface 11 is tilted, when the display surface 11 is rotated and tilted in the pitch direction as indicated by a thick solid arrow in A of Fig. 18.

In B of Fig. 18, before the display surface 11 is tilted, in accordance with the principle described above with reference to Fig. 5, the projected image is generated as if the display surface 11 were located right in front of the user as a window opposed to the user and the user were viewing the image model of the still image through the window.

Then, after the display surface 11 is rotated and tilted in the pitch direction, in accordance with the principle described above with reference to Fig. 5, the projected image is generated as if the user were viewing the image model of the still image through the display surface 11 as a window, which is tilted in the pitch direction, right in front of the user.

Specifically, the projected image is generated in such a manner that, even when the display surface 11 is tilted in the pitch direction, the image model of the still image present on the opposite side (back side) of the display surface 11 as the tilted window remains on the spot, and when the window is tilted in the pitch direction, the range in which the image model is visible seems to be changed to a narrower range than that before the window is tilted.

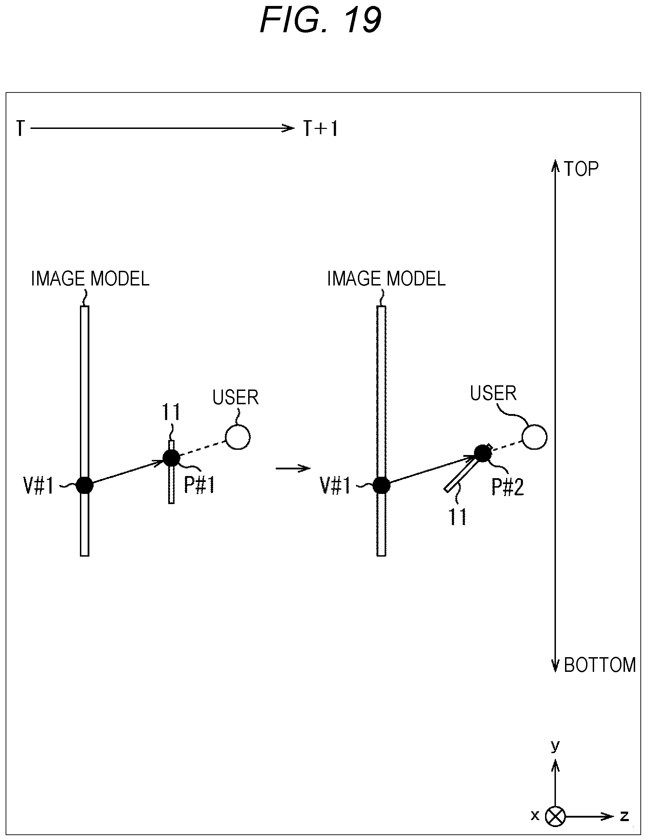

Fig. 19 is a diagram further illustrating the example of generating the projected image when the display surface 11 is tilted in the pitch direction.

Fig. 19 is a view showing the reference coordinate system as viewed in the negative direction of the x-axis. The direction perpendicular to the drawing sheet, the bottom-to-top direction, and the left-to-right direction respectively correspond to the x-axis, the y-axis, and the z-axis of the reference coordinate system.

Referring to Fig. 19, the display surface 11 opposed right in front of the user at the time T is tilted in the pitch direction at the time T + 1.

Note that in Fig. 19, before and after the display surface 11 is tilted, the image model (of the still image of the 2D image) is parallel to the xy plane.

Further, the display surface 11 is parallel to the xy plane at the time T before the display surface 11 is tilted in the pitch direction, but is not parallel to the xy plane at the time T + 1 after the display surface 11 is tilted in the pitch direction.

A certain voxel V#1 of the image model is projected on the pixel P#1 on the upper side near the center of the display surface 11 at the time T before the display surface 11 is tilted in the pitch direction, and the voxel V#1 is projected on the pixel P#2 on the upper side far from the center of the display surface 11 at the time T + 1 after the display surface 11 is tilted.

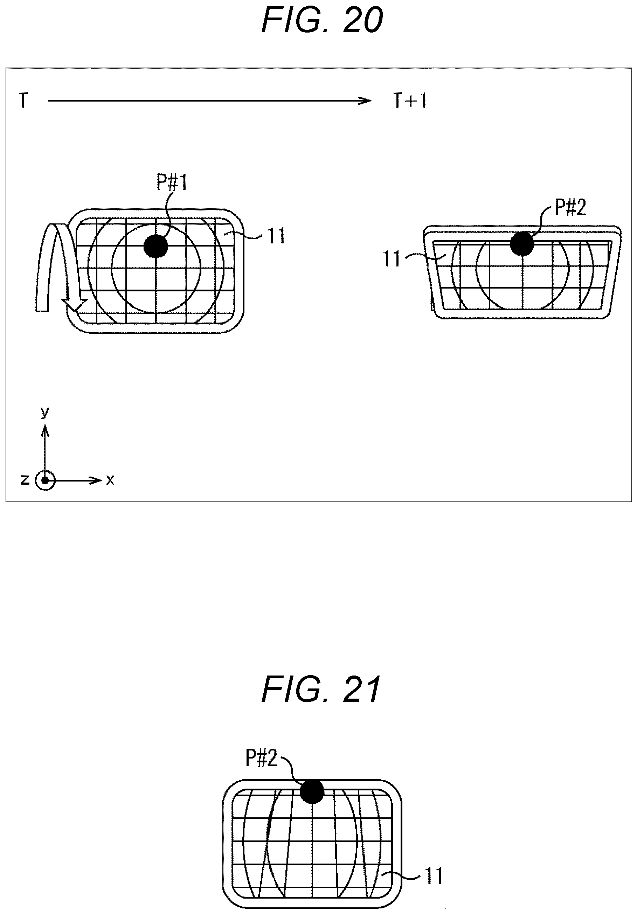

Fig. 20 is a diagram showing a display example of the projected image at the time T when the voxel V#1 shown in Fig. 19 is projected on the pixel P#1, and a display example of the projected image at the time T + 1 when the voxel V#1 is projected on the pixel P#2.

The voxel V#1 of the image model looks like the pixel P#1 on the upper side near the center of the display surface 11 as a window at the time T before the display surface 11 is tilted, and the voxel V#1 looks like the pixel P#2 on the upper side far from the center of the display surface 11 as a window (on the upper side within the window frame of the window imitated by the display surface 11) at the time T + 1 after the display surface 11 is tilted.

As a result, the user can enjoy feeling as if the image model were oriented in front of the eyes of the user and the range of the image model viewed through the display surface 11 as a window were changed by tilting the window in the pitch direction.

Fig. 21 is a diagram showing an example of the projected image displayed on the display surface 11 when the display surface 11 tilted in the pitch direction shown in Fig. 20 is viewed in the direction orthogonal to the display surface 11.

The projected image displayed on the display surface 11 tilted in the pitch direction is an image of a scenery visible when the image model is viewed through the tilted display surface 11 as a window, when the display surface 11 tilted in the pitch direction is viewed. That is, the projected image is an image that is extended in the vertical direction.

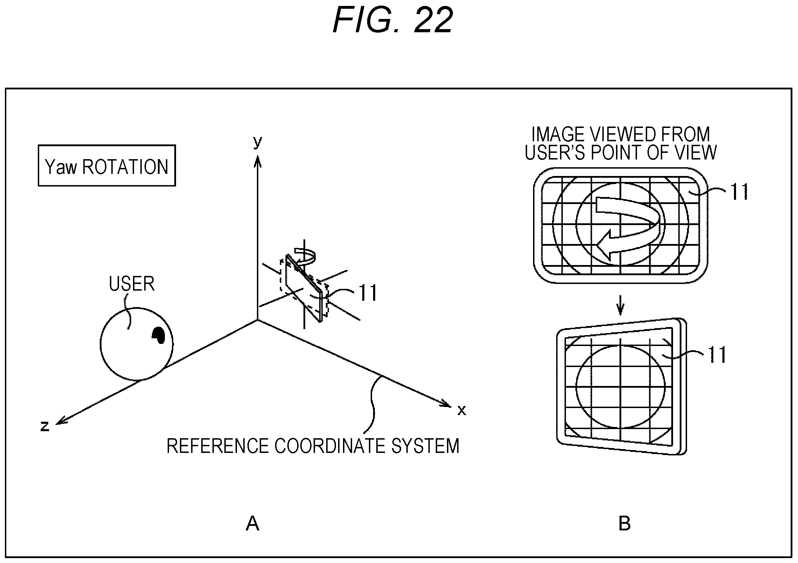

Fig. 22 is a diagram illustrating an example of generating the projected image when the display surface 11 is rotated and tilted in the yaw direction.

A of Fig. 22 shows an example of arranging the display surface 11 and the user on the reference coordinate system at the default timing.

In the rotation in the yaw direction of the display surface 11 (rotation about the y-axis), the display surface 11 is rotated and tilted, by the user, in a direction indicated by a thick solid arrow in A of Fig. 22, or in a direction opposite to the direction, with a straight line parallel to the y-axis passing through the center of the display surface 11 at the default timing, for example, as a rotation axis, without changing the position of the display surface.

B of Fig. 22 shows the projected image generated before the display surface 11 is tilted (at the default timing) and the projected image generated after the display surface 11 is tilted, when the display surface 11 is rotated and tiled in the yaw direction as indicated by a thick solid arrow in A of Fig. 22.

In B of Fig. 22, before the display surface 11 is tilted, in accordance with the principle described above with reference to Fig. 5, the projected image is generated as if the display surface 11 serving as a window opposed to the user were right in front of the user and the user were viewing the image model of the still image through the window.

Then, after the display surface 11 is rotated and tilted in the yaw direction, in accordance with the principle described above with reference to Fig. 5, the projected image is generated as if the display surface 11 serving as a window tilted in the yaw direction were right in front of the user and the user were viewing the image model of the still image through the window.

Specifically, the projected image is generated in such a manner that, even when the display surface 11 is tilted in the yaw direction, the image model of the still image present on the opposite side (back side) of the display surface 11 as a tilted window remains on the spot, and when the window of the display surface 11 as the tilted window is tilted in the yaw direction, the range in which the image model is visible seems to be changed to a narrower range than that before the window is tilted.

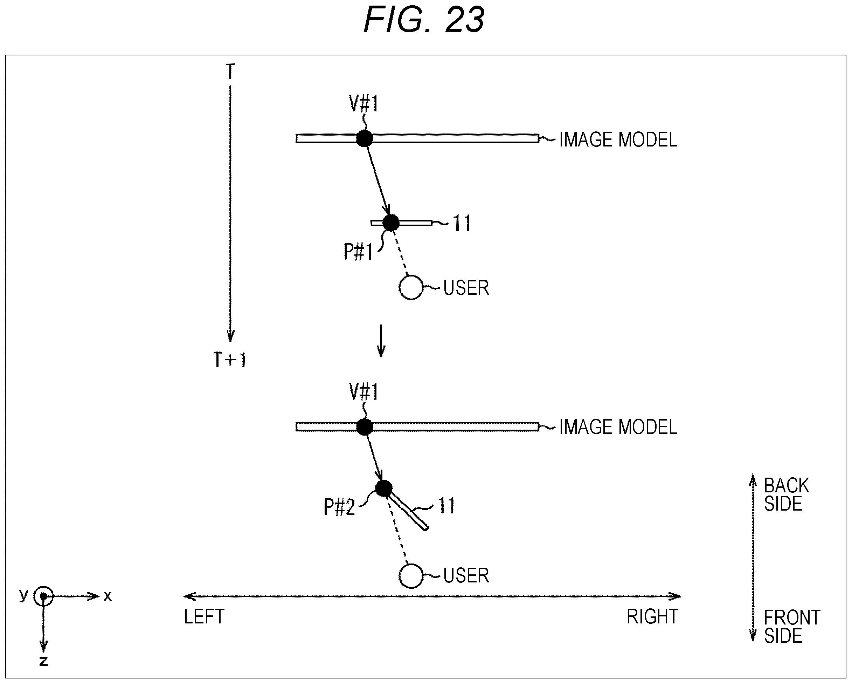

Fig. 23 is a diagram further illustrating the example of generating the projected image when the display surface 11 is tilted in the yaw direction.

Fig. 23 is a view showing the reference coordinate system viewed in the positive direction of the y-axis. The left-to-right direction, the direction perpendicular to the drawing sheet, and the top-to-bottom direction respectively correspond to the x-axis, the y-axis, and the z-axis of the reference coordinate system.

Referring to Fig. 23, the display surface 11 opposed right in front of the user at the time T is tilted in the yaw direction at the time T + 1.

Note that in Fig. 23, the image model (of the still image of the 2D image) is parallel to the xy plane before and after the display surface 11 is tilted.

Further, the display surface 11 is parallel to the xy plane at the time T before the display surface 11 is tilted in the yaw direction, but is not parallel to the xy plane at the time T + 1 after the display surface 11 is tilted in the yaw direction.

A certain voxel V#1 of the image model is projected on the pixel P#1 on the left side near the center of the display surface 11 at the time T before the display surface 11 is tilted in the yaw direction, and the voxel V#1 is projected on the pixel P#2 on the left side far from the center of the display surface 11 at the time T + 1 after the display surface 11 is tilted.

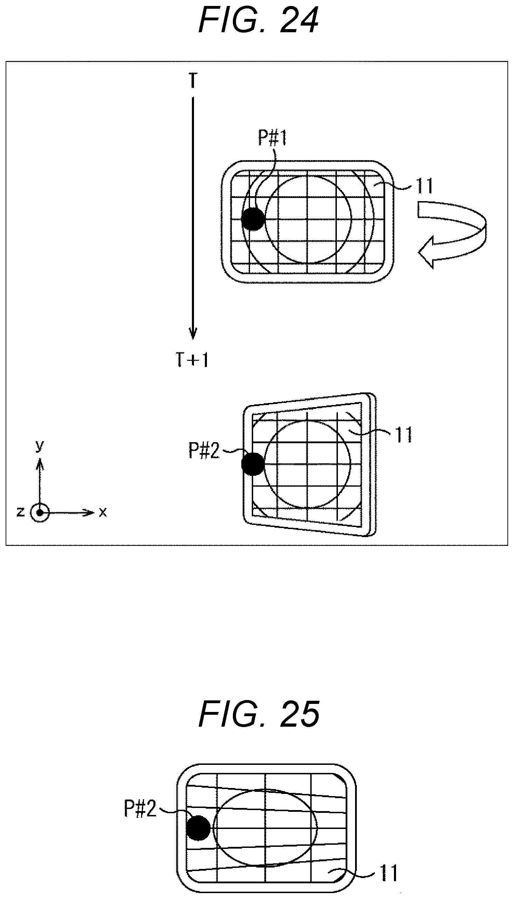

Fig. 24 is a diagram showing a display example of the projected image at the time T when the voxel V#1 shown in Fig. 23 is projected on the pixel P#1, and a display example of the projected image at the time T + 1 when the voxel V#1 is projected on the pixel P#2.

The voxel V#1 of the image model looks like the pixel P#1 on the left side near the center of the display surface 11 as a window at the time T before the display surface 11 is tilted, and the voxel V#1 looks like the pixel P#2 on the left side far from the center of the display surface 11 as a window (on the left side of the window frame of the window imitated by the display surface 11)at the time T + 1 after the display surface 11 is tilted.

As a result, the user can enjoy feeling as if the image model were oriented in front of the eyes of the user and the range of the image model viewed through the display surface 11 as a window were changed by tilting the window in the yaw direction.

Fig. 25 is a diagram showing an example of the projected image displayed on the display surface 11 when the display surface 11 tilted in the yaw direction in Fig. 24 is viewed in the direction orthogonal to the display surface 11.

The projected image displayed on the display surface 11 tilted in the yaw direction is an image of a scenery visible when the image model is viewed through the display surface 11, as a window, which is tilted in the yaw direction, when the display surface 11 tilted in the yaw direction is viewed, i.e., an image which is extended in the horizontal direction.

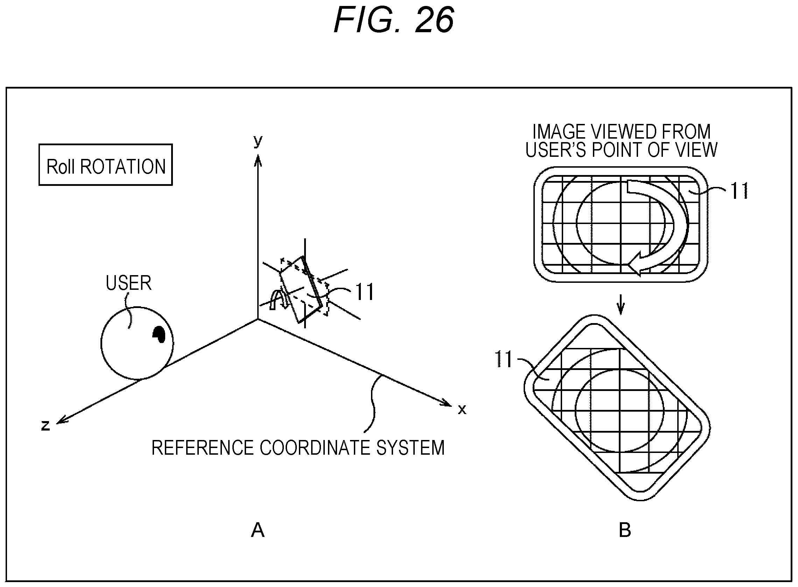

Fig. 26 is a diagram illustrating an example of generating the projected image when the display surface 11 is rotated and tilted in the roll direction.

A of Fig. 26 shows an example of arranging the display surface 11 and the user in the reference coordinate system at the default timing.

In the rotation in the roll direction of the display surface 11 (rotation about the z-axis), the display surface 11 is rotated and tilted, by the user, in a direction indicated by a thick solid arrow in A of Fig. 26, or in a direction opposite to the direction, with a straight line parallel to the z-axis passing through the center of the display surface 11 at the default timing, for example, as a rotation axis, without changing the position of the display surface.

B of Fig. 26 shows the projected image generated before the display surface 11 is tilted (at the default timing) and the projected image generated after the display surface 11 is tilted, when the display surface 11 is rotated in the roll direction and tilted as indicated by a thick solid line shown in A of Fig. 26.

In B of Fig. 26, before the display surface 11 is tilted, in accordance with the principle described above with reference to Fig. 5, the projected image is generated as if the display surface 11 were right in front of the user as a window whose long and short sides face in the left-to-right direction and the top-to-bottom direction, respectively, of the user, and the user were viewing the image model of the still image through the window.

Then, after the display surface 11 is rotated and tilted in the roll direction, in accordance with the principle described above with reference to Fig. 5, the projected image is generated as if the display surface 11 were right in front of the user as a window tilted in the roll direction and the user were viewing the image model of the still image through the window.

Specifically, the projected image is generated in such a manner that, even when the display surface 11 is tilted in the roll direction, the image model of the still image present on the opposite side (back side) of the display surface 11 as the tilted window remains on the spot, and when the window is tilted in the roll direction, the range in which the image model is visible were changed to a range different from that before the window is tilted.

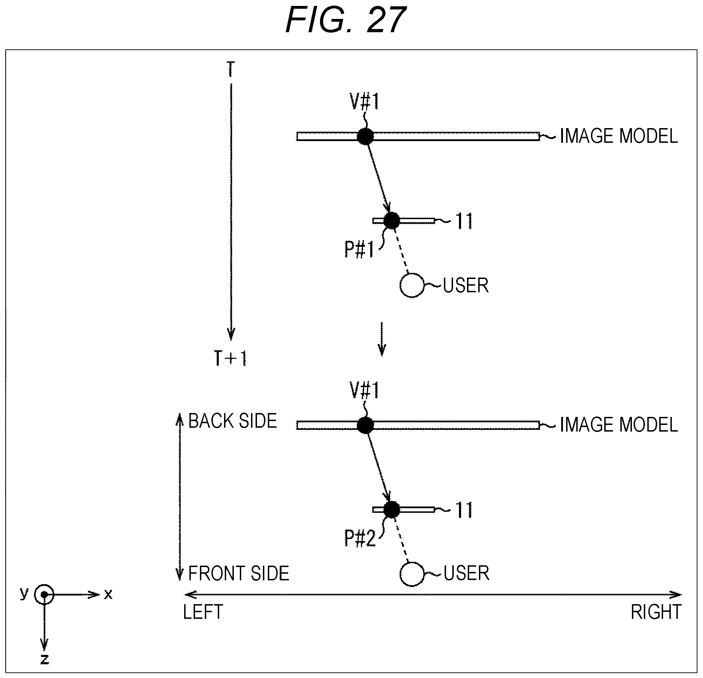

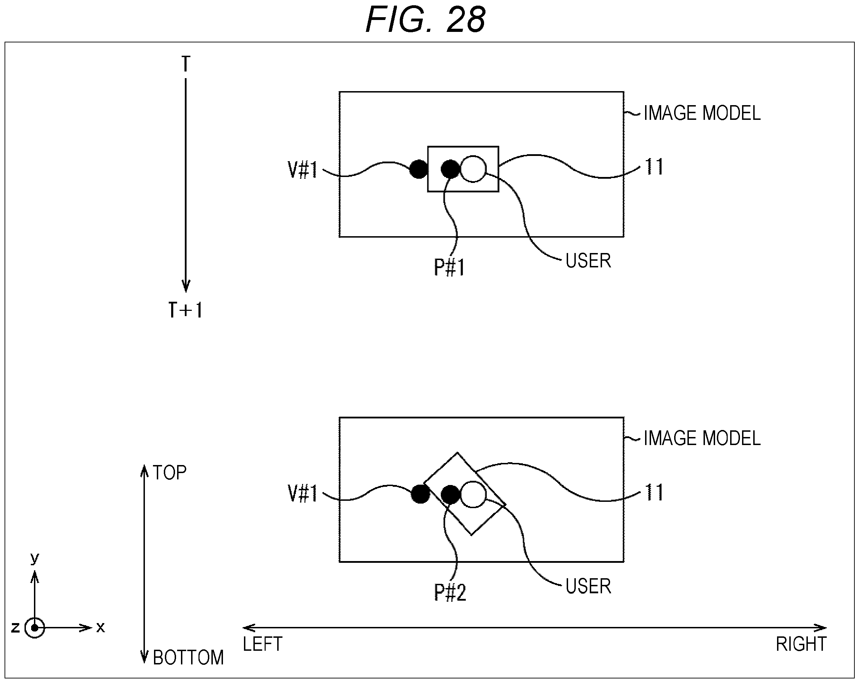

Figs. 27 and 28 are diagrams further illustrating the example of generating the projected image when the display surface 11 is tilted in the roll direction.

Fig. 27 is a view of the reference coordinate system as viewed in the positive direction of the y-axis. The right-left direction, the direction perpendicular to the drawing sheet, and the top-to-bottom direction respectively correspond to the x-axis, the y-axis, and the z-axis of the reference coordinate system.

Fig. 28 is a view of the reference coordinate system as viewed in the positive direction of the z-axis. The right-left direction, the bottom-to-top direction, and the direction perpendicular to the drawing sheet respectively correspond to the x-axis, the y-axis, and the z-axis of the reference coordinate system.

Referring to Figs. 27 and 28, the display surface 11 that is opposed (not tilted in the roll direction) right in front of the user at the time T is tilted in the roll direction at the time T + 1.

Note that, referring to Figs. 27 and 28, the display surface 11 and the image model (of the still image of the 2D image) are parallel to the xy plane before and after the display surface 11 is tilted.

A certain voxel V#1 of the image model is projected on the pixel P#1 on a straight line parallel to the x-axis passing through the center of the display surface 11 at the time T before the display surface 11 is tilted in the roll direction, and the voxel V#1 is projected on the pixel P#2 on the lower left side from the center of the display surface 11 (which is not tilted in the roll direction) at the time T + 1 after the display surface 11 is tilted.

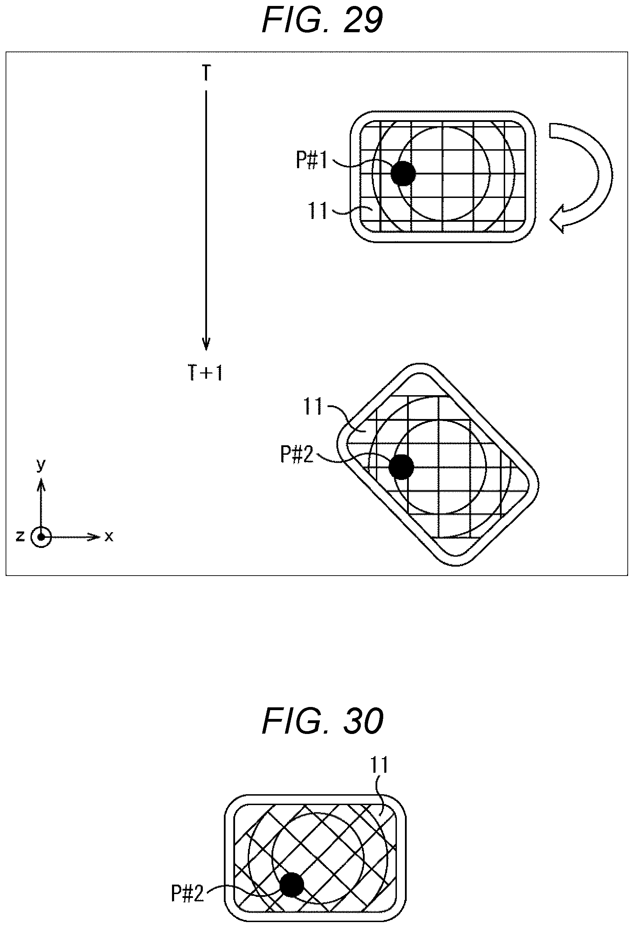

Fig. 29 is a diagram showing a display example of the projected image at the time T when the voxel V#1 shown in Figs. 27 and 28 is projected on the pixel P#1, and a display example of the projected image at the time T + 1 when the voxel V#1 is projected on the pixel P#2.

The voxel V#1 of the image model looks like the pixel P#1 on a straight line parallel to the x-axis passing through the center of the display surface 11 as a window at the time T before the display surface 11 is tilted, and the voxel V#1 looks like the pixel P#2 on the lower left side (lower left side within the window frame imitated by the display surface 11) from the center of the display surface 11 as a window at the time T + 1 after the display surface 11 is tilted.

As a result, the user can enjoy feeling as if the image model were oriented in front of the eyes of the user and the range of the image model viewed through the window were changed by tilting the window in the roll direction through the display surface 11 as a window.

Fig. 30 is a diagram showing an example of the projected image displayed on the display surface 11 when the display surface 11 tilted in the roll direction shown in Fig. 29 is viewed while being similarly tilted in the roll direction.

The projected image displayed on the display surface 11 tilted in the roll direction is an image tilted in the roll direction which is opposite to the roll direction in which the display surface 11 is tilted in such a manner that an image of a scenery visible when the image model is viewed through the tilted display surface 11 as a window, when the display surface 11 tilted in the roll direction is viewed.

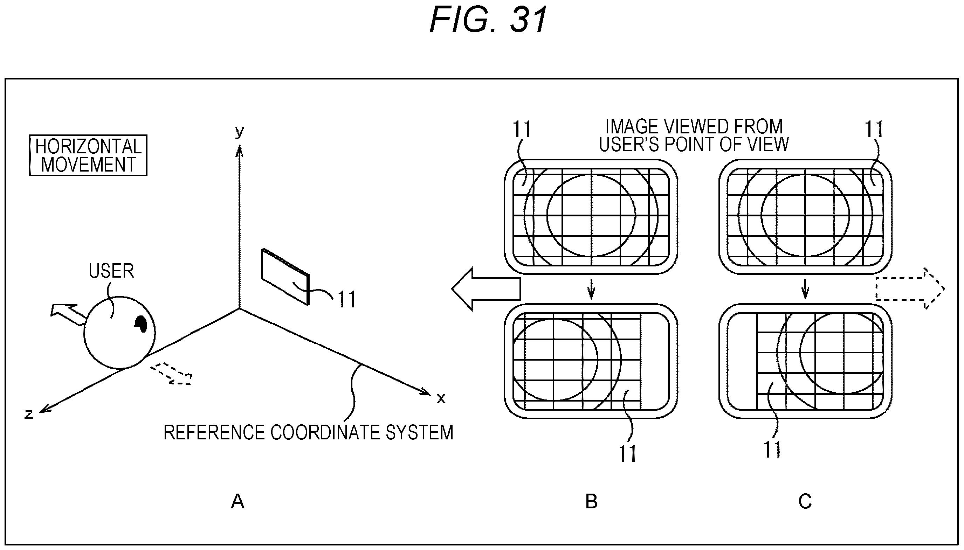

Fig. 31 is a diagram illustrating an example of generating the projected image when the user is moved in the horizontal direction.

A of Fig. 31 shows an example of arranging the display surface 11 and the user in the reference coordinate system at the default timing.

When the user is moved in the horizontal direction, the user is moved leftward as indicated by a thick solid arrow in A of Fig. 31, or is moved rightward as indicated by a thick dotted arrow in A of Fig. 31, within a plane parallel to the display surface 11 (plane parallel to the xy plane) at the default timing.

B of Fig. 31 shows the projected image generated before the movement (at the default timing) and the projected image generated after the movement, when the user is moved leftward.

In B of Fig. 31, before the user is moved, in accordance with the principle described above with reference to Fig. 5, the projected image is generated as if the display surface 11 were right in front of the user as a window and the user were viewing the image model of the still image through the window.

Then, after the user is moved leftward, in accordance with the principle described above with reference to Fig. 5, the projected image is generated as if the display surface 11 were on the right side of the front of the user as a window and the user were viewing the image model of the still image through the window.

Specifically, the projected image is generated in such a manner that, even when the user is moved leftward, the image model of the still image present on the opposite side (back side) of the display surface 11 as a window remains on the spot, and when the user is moved, the range in which the image model is visible were changed to a range on the right side of that before the movement.

C of Fig. 31 shows the projected images generated before and after the user is moved rightward.

When the user is moved rightward, the projected image is generated in such a manner that the image model of the still image present on the opposite side of the display surface 11 as a window remains on the spot, and when the user is moved, the range in which the image model is visible were changed to a range on the left of that before the movement.

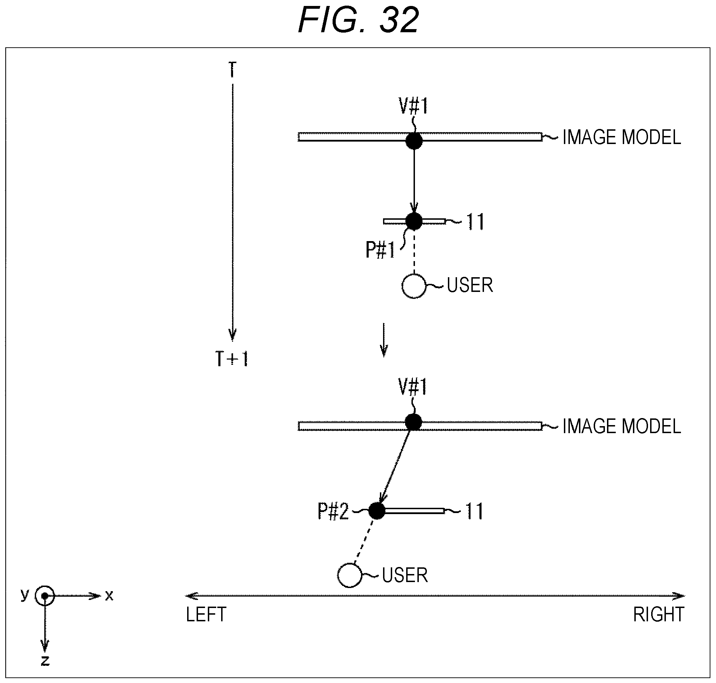

Fig. 32 is a diagram further illustrating the example of generating the projected image when the user is moved in the horizontal direction.

Fig. 32 is a view showing the reference coordinate system viewed in the positive direction of the y-axis. The left-to-right direction, the direction perpendicular to the drawing sheet, and the top-to-bottom direction respectively correspond to the x-axis, the y-axis, and the z-axis of the reference coordinate system.

Referring to Fig. 32, the user located right in front of the display surface 11 at the time T is moved to the left of the front surface of the display surface 11 at the time T + 1.

Note that in Fig. 32, before and after the user is moved, the display surface 11 and the image model (of the still image of the 2D image) are parallel to the xy plane.

A certain voxel V#1 of the image model is projected on the pixel P#1 at the center of the display surface 11 at the time T before the user is moved, and the voxel V#1 is projected on the pixel P#2 on the left side of the display surface 11 at the time T + 1 after the user is moved to the left.

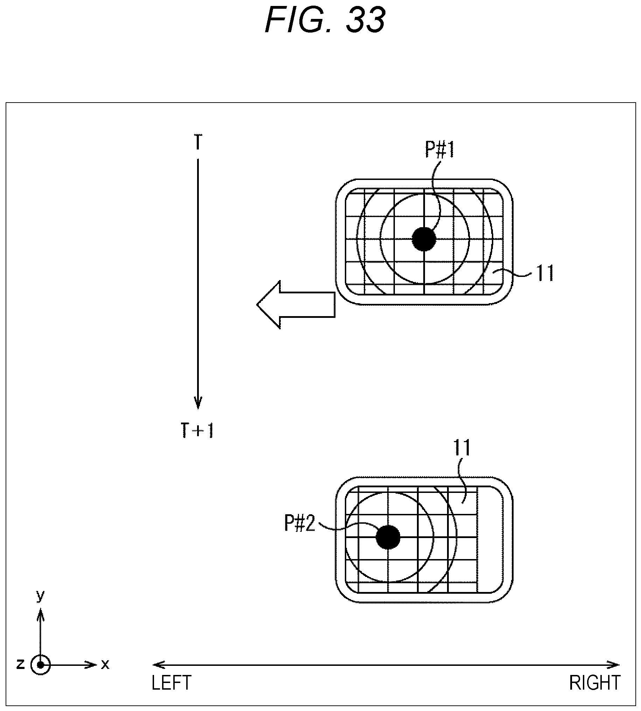

Fig. 33 is a diagram showing a display example of the projected image at the time T when the voxel V#1 shown in Fig. 32 is projected on the pixel P#1, and a display example of the projected image at the time T + 1 when the voxel V#1 is projected on the pixel P#2.

The voxel V#1 of the image model looks like the pixel P#1 at the center of the display surface 11 as a window at the time T before the user is moved, and the voxel V#1 looks like the pixel P#2 to the left side of the display surface 11 as a window at the time T + 1 after the user is moved to the left.

As a result, the user can enjoy feeling as if the image model were oriented in front of the eyes of the user, and when the user is moved to the left, the range of the image model viewed though the display surface 11 as a window were changed.

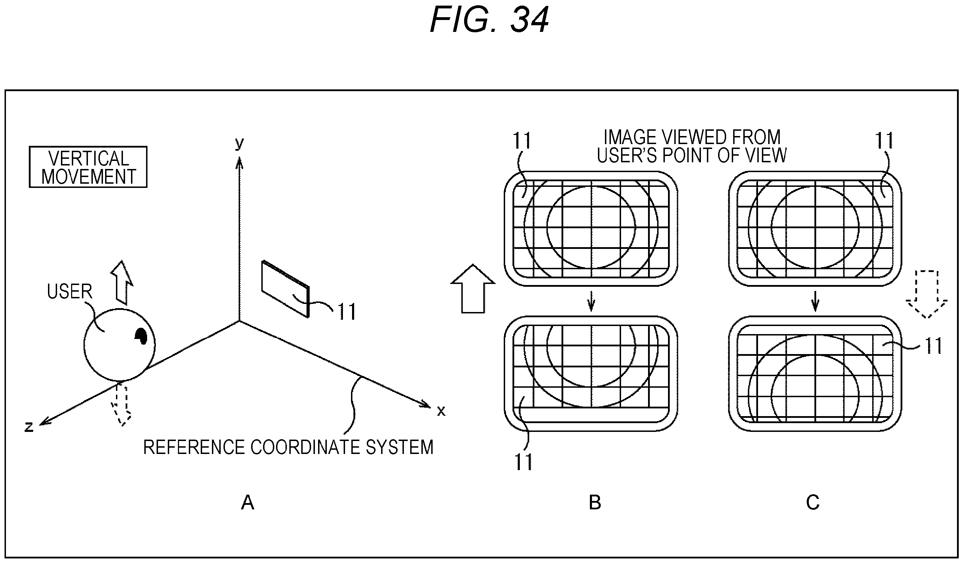

Fig. 34 is a diagram illustrating an example of generating the projected image when the user is moved in the vertical direction.

A of Fig. 34 shows an example of arranging the display surface 11 and the user on the reference coordinate system at the default timing.

When the user is moved in the vertical direction, the user is moved in a direction indicated by a thick solid arrow in A of Fig. 34, or upward, or is moved in a direction indicated by a thick dotted arrow in A of Fig. 34, or downward, within a plane parallel to the display surface 11 (plane parallel to the xy plane) at the default timing.

B of Fig. 34 shows the projected image generated before the movement (at the default timing) and the projected image generated after the movement, when the user is moved upward.

B of Fig. 34, before the user is moved, in accordance with the principle described above with reference to Fig. 5, the projected image is generated as if the display surface 11 were right in front of the user as a window and the user were viewing the image model of the still image through the window.

Then, after the user is moved upward, in accordance with the principle described above with reference to Fig. 5, the projected image is generated as if the display surface 11 were on the lower side of the front of the user as a window, and the user were viewing the image model of the still image through the window.

In other words, the projected image is generated, even when the user is moved upward, the image model of the still image present on the opposite side (back side) of the display surface 11 as a window remains on the spot, and when the user is moved, the range in which the image model is visible were changed to a range on the lower side of that before the movement.

C of Fig. 34 shows the projected images generated before and after the user is moved downward.

The projected image is generated in such a manner that, even when the user is moved downward, the image model of the still image present on the opposite side of the display surface 11 as a window remains on the spot, and when the user is moved, the range in which the image model is visible were changed to a range on the upper side of that before the movement.

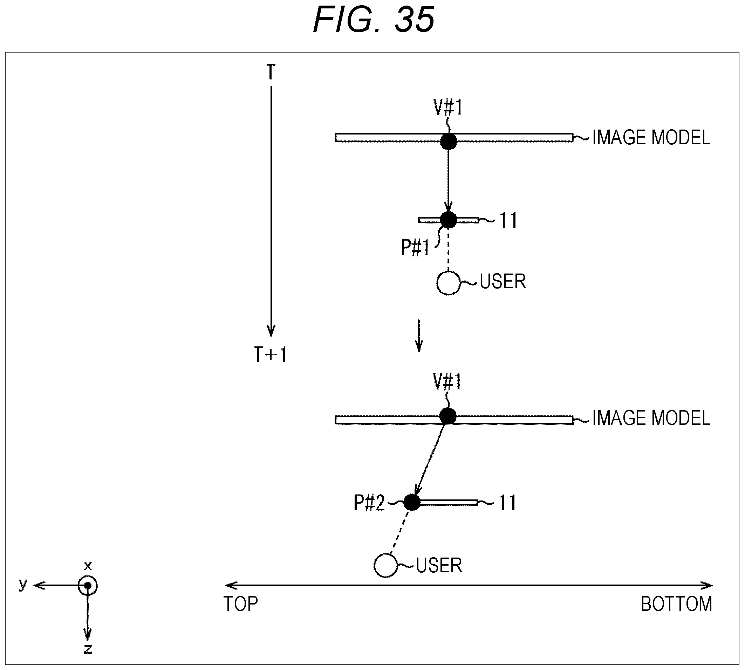

Fig. 35 is a diagram further illustrating the example of generating the projected image when the user is moved in the vertical direction.

Fig. 35 is a view showing the reference coordinate system as viewed in the positive direction of the x-axis. The direction perpendicular to the drawing sheet, the right-to-left direction, and the top-to-bottom direction respectively correspond to the x-axis, the y-axis, and the z-axis of the reference coordinate system.

Referring to Fig. 35, at the time T, the user located right in front of the display surface 11 is moved onto the front side of the display surface 11 at the time T + 1.

Note that in Fig. 35, before and after the user is moved, the display surface 11 and the image model (of the still image of the 2D image) are parallel to the xy plane.

A certain voxel V#1 of the image model is projected on the pixel P#1 at the center of the display surface 11 at the time T before the user is moved, and the voxel V#1 is projected on the pixel P#2 on the upper side of the display surface 11 at the time T + 1 after the user is moved upward.

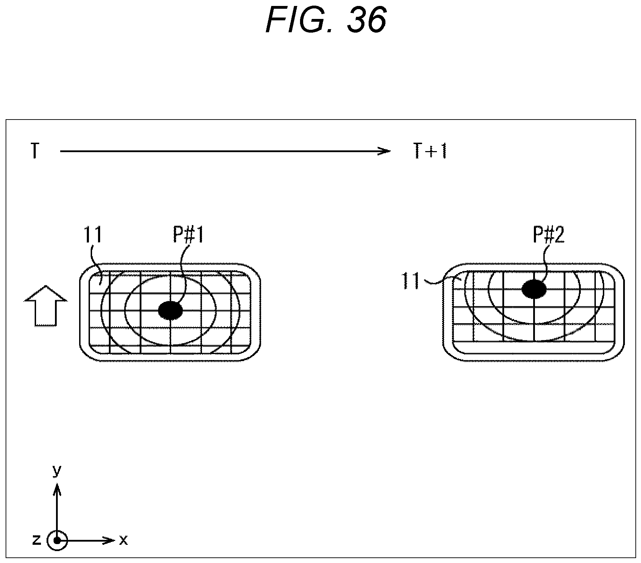

Fig. 36 is a diagram showing a display example of the projected image at the time T when the voxel V#1 shown in Fig. 35 is projected on the pixel P#1, and a display example of the projected image at the time T + 1 when the voxel V#1 is projected on the pixel P#2.

The voxel V#1 of the image model looks like the pixel P#1 at the center of the display surface 11 as a window at the time T before the user is moved, and voxel V#1 looks like the pixel P#2 on the display surface 11 as a window at the time T + 1 after the user is moved upward.

As a result, the user can enjoy feeling as if the image model were oriented in front of the eyes of the user, and when the user is moved upward, the range of the image model viewed through the display surface 11 as a window were changed.

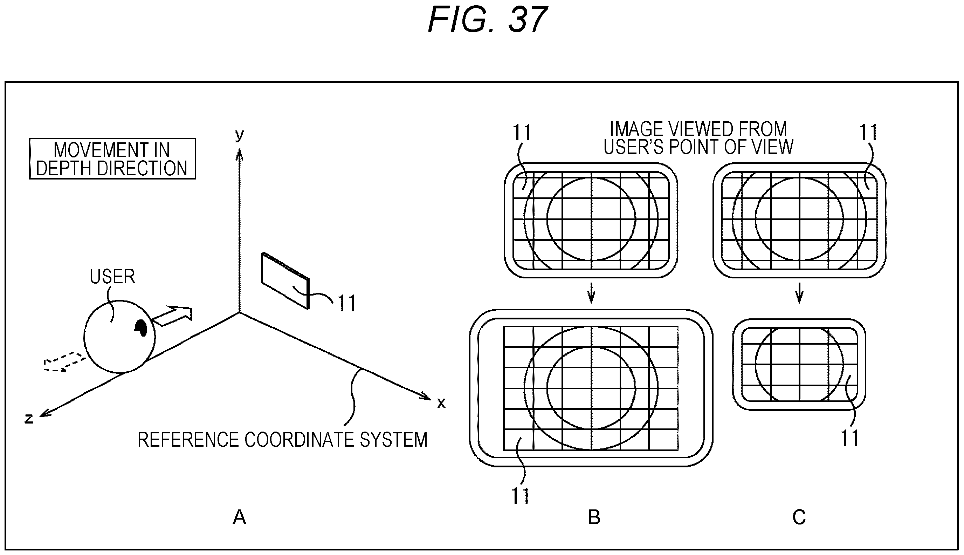

Fig. 37 is a diagram illustrating an example of generating the projected image when the user is moved in the depth direction.

A of Fig. 37 shows an example of arranging the display surface 11 and the user in the reference coordinate system at the default timing.

When the user is moved in the depth direction, the user is moved in the direction orthogonal to the display surface 11 at the default timing. Specifically, the user is moved in the depth direction (direction from the user to the display surface 11) as indicated by a thick solid arrow in A of Fig. 37, or is moved in the front direction (direction from the display surface 11 to the user) as indicated by a thick dotted arrow in A of Fig. 37.

B of Fig. 37 shows the projected image generated before the movement (at the default timing) and the projected image generated after the movement, when the user is moved in the depth direction.

In B of Fig. 37, before the user is moved, in accordance with the principle described above with reference to Fig. 5, the projected image is generated as if the display surface 11 were right in front of the user as a window and the user were viewing the image model of the still image through the window.

Then, after the user is moved in the depth direction, in accordance with the principle described above with reference to Fig. 5, the projected image is generated as if the display surface 11 were near the front of the user as a window and the user were viewing the image model of the still image through the window.

Specifically, the projected image is generated in such a manner that, even when the user is moved in the depth direction, the image model of the still image present on the opposite side (back side) of the display surface 11 as a window remains on the spot, and when the user is moved, the range in which the image model is visible were changed to a range wider than that before the movement.

C of Fig. 37 shows the projected images generated before and after the user is moved in the front direction.

The projected image is generated in such a manner that, even when the user is moved in the front direction, the image model of the still image present on the opposite side of the display surface 11 as a window remains on the spot, and when the user is moved, the range in which the image model is visible were changed to a range narrower than that before the movement.

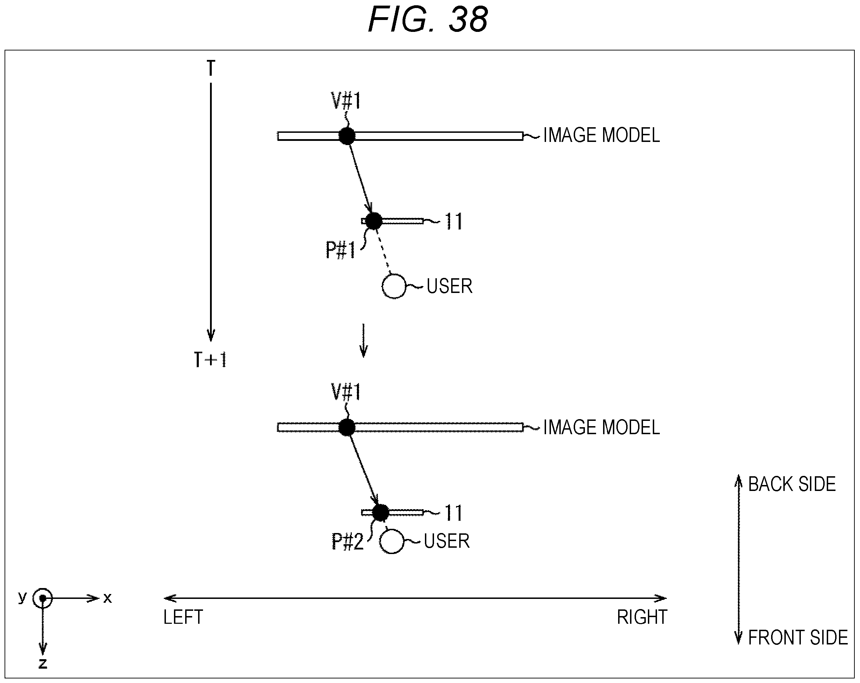

Fig. 38 is a diagram further illustrating the example of generating the projected image when the user is moved in the depth direction.

Fig. 38 is a view showing the reference coordinate system as viewed in the positive direction of the y-axis. The left-to-right direction, the direction perpendicular to the drawing sheet, and the top-to-bottom direction respectively correspond to the x-axis, the y-axis, and the z-axis of the reference coordinate system.

Referring to Fig. 38, the user located right in front of the display surface 11 at the time T is moved to a position closer to the front surface of the display surface 11 at the time T + 1.

Note that in Fig. 38, before and after the user is moved, the display surface 11 and the image model (of the still image of the 2D image) are parallel to the xy plane.

A certain voxel V#1 of the image model is projected on the pixel P#1 on the left side apart from the center of the display surface 11 at the time T before the user is moved, and the voxel V#1 is projected on the pixel P#2 near the center of the display surface 11 at the time T + 1 after the user is moved to the back side.

In this case, when the user is moved in the depth direction, the user and the display surface 11 are located close to each other, and thus the viewing angle of the scenery viewed through the display surface 11 as a window becomes large.

Also when the display surface 11 is moved in the front direction, as described above with reference to Figs. 15 to 17, the user and the display surface 11 are located close to each other, and thus the viewing angle of the scenery viewed through the display surface 11 as s window becomes large.

Accordingly, the viewing angle of the scenery viewed through the display surface 11 as a window becomes large when the display surface 11 is moved in the front direction, as well as when the user is moved in the depth direction.

However, when the user is moved in the depth direction, the user and the image model are located close to each other, and thus the size of the object constituting the scenery viewed through the display surface 11 as the window becomes larger than that before the user is moved.

On the other hand, when the display surface 11 is moved in the front direction, as described above with reference to Figs. 15 to 17, the distance between the user and the image model is not changed. Accordingly, the size of the object constituting the scenery viewed through the display surface 11 as a window does not change before and after the display surface 11 is moved.

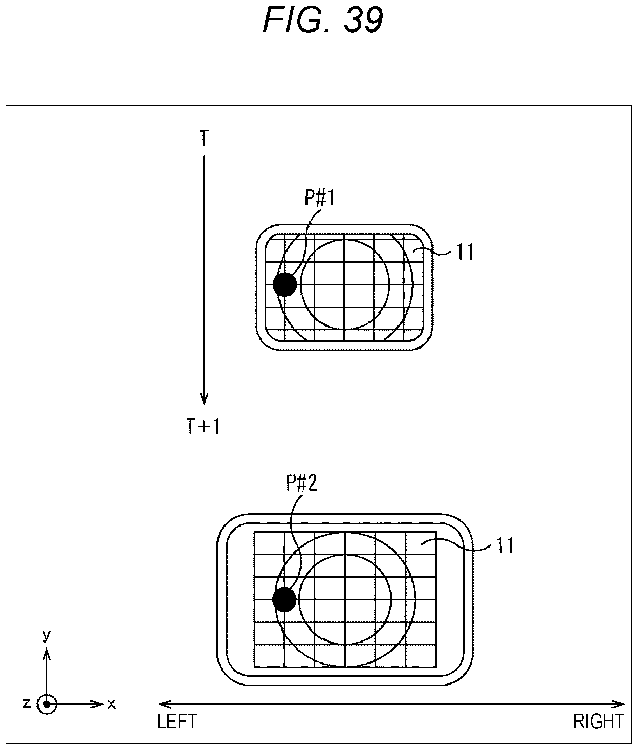

Fig. 39 is a diagram showing a display example of the projected image at the time T when the voxel V#1 shown in Fig. 38 is projected on the pixel P#1, and a display example of the projected image at the time T + 1 when the voxel V#1 is projected on the pixel P#2.

The voxel V#1 of the image model looks like the pixel P#1 on the left side apart from the center of the display surface 11 as a window at the time T before the user is moved, and the voxel V#1 looks like the pixel P#2 at the position near the center of the display surface 11 as a window at the time T + 1 after the user is moved to the back side.

As a result, the user can enjoy feeling as if the image model were oriented in front of the eyes of the user, and when the user is moved to the back side, the range of the image model viewed through the display surface 11 as a window were changed.

### <Generation of the projected image using an image model of a 3D image>

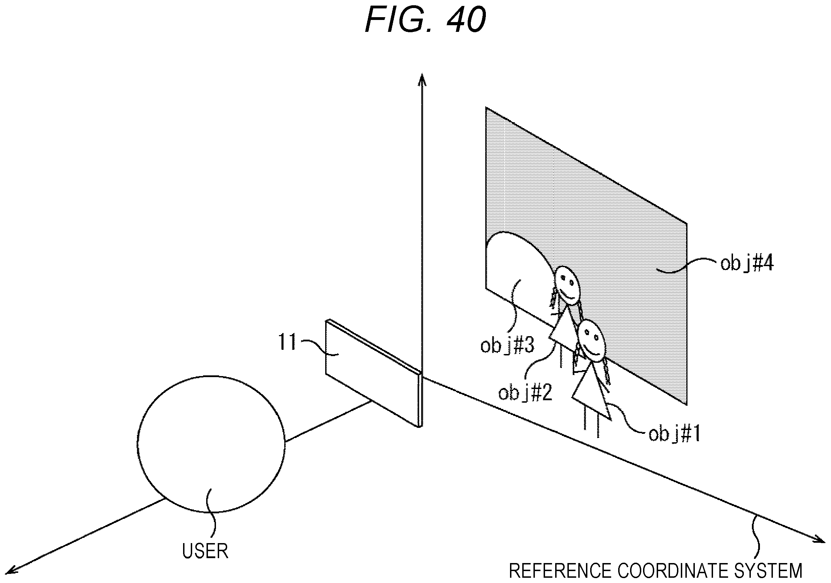

Fig. 40 is a diagram illustrating the generation of the projected image when the image model of the 3D image is used.

In other words, Fig. 40 shows an example of the reference coordinate system in which the user, the display surface 11, and the image model of the 3D image are arranged.

In this case, referring to Fig. 40, the image model of the 3D image is composed of four objects obj#1, obj#2, obj#3, and obj#4 which have different depth positions (depths).

Also when an image model of a 3D image is used, the projected image is generated in accordance with the principle described above with reference to Fig. 5.

Incidentally, the voxels constituting an image model of a 2D image include, as positional information, positional information in the horizontal direction and positional information in the vertical direction, and the voxels do not include positional information in the depth direction, or even if the voxels include positional information in the depth direction, the positional information in the depth direction included in all the voxels is the same information.

On the other hand, the voxels constituting an image model of a 3D image (hereinafter referred to also as a 3D image model) include, as positional information, positional information in the horizontal direction, positional information in the vertical direction, and positional direction in the depth direction. The positional information in the depth direction included in the voxels is not necessarily the same information, but may be different information.

Accordingly, when the user is moved, the projected image in which motion parallax similar to that when an object having a depth is viewed in the real world is generated is displayed on the display surface 11 as a window.

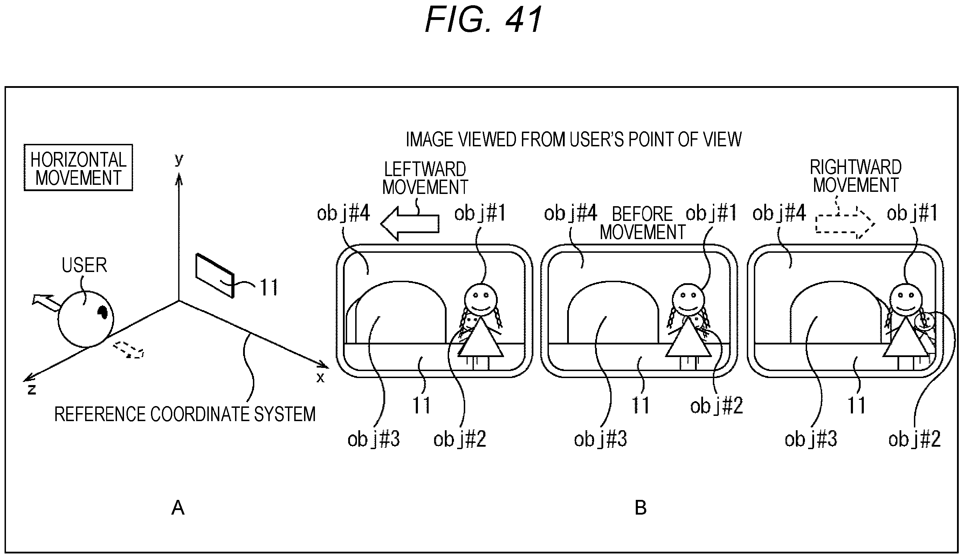

Fig. 41 is a diagram illustrating an example of generating the projected image using a 3D image model when the user is moved in the horizontal direction.

A of Fig. 41 shows an example of arranging the display surface 11 and the user in the reference coordinate system at the default timing.

When the user is moved in the horizontal direction, the user is moved leftward as indicated by a thick solid arrow in A of Fig. 41, or is moved rightward as indicated by a thick dotted arrow in A of Fig. 41, within a plane parallel to the display surface 11 (plane parallel to the xy plane) at the default timing.

B of Fig. 41 shows the projected image generated before the movement (at the default timing) and the projected image generated after the movement when the user is moved in the horizontal direction.

In B of Fig. 41, before the user is moved, in accordance with the principle described above with reference to Fig. 5, the projected image is generated as if the display surface 11 serving as a window were right in front of the user and the user were viewing the 3D image model through the window.

Before the user moves, for example, the projected image is generated in such a manner that the substantially entire object obj#2 which is located substantially right behind the object obj#1 hides behind the object obj#1.

Then, after the user is moved leftward in the horizontal direction, in accordance with the principle described above with reference to Fig. 5, the projected image is generated as if the user were viewing the 3D image model through the display surface 11 as a window on the right side of the front of the user.

Specifically, the projected image is generated in such a manner that, even when the user is moved leftward, the 3D image model present on the opposite side (back side) of the display surface 11 as a window remains on the spot, and when the user is moved, the range in which the image model is visible were changed to a range on the right side of that before the movement.

Further, when the user is moved leftward, the projected image is generated in which motion parallax similar to that when an object having a depth is moved to the left while the object is viewed in the real world is generated.

Accordingly, after the user is moved leftward, as shown in B of Fig. 41, the projected image is generated in which the object obj#2 which is located substantially right behind the object obj#1 is viewed from the left side of the object obj#1.

Similarly, the projected image is generated in such a manner that, even when the user is moved rightward in the horizontal direction, the 3D image model present on the opposite side of the display surface 11 as a window remains on the spot, and when the user is moved, the range in which the image model is visible were changed to a range on the left side of that before the movement.

Further, when the user is moved rightward, the projected image is generated in which motion parallax similar to that when an object having a depth is moved rightward while the object is viewed in the real world is generated.

Accordingly, after the user is moved rightward, as shown in B of Fig. 41, the projected image is generated in which the object obj#2 which is located substantially right behind the object obj#1 is viewed from the right side of the object obj#1.

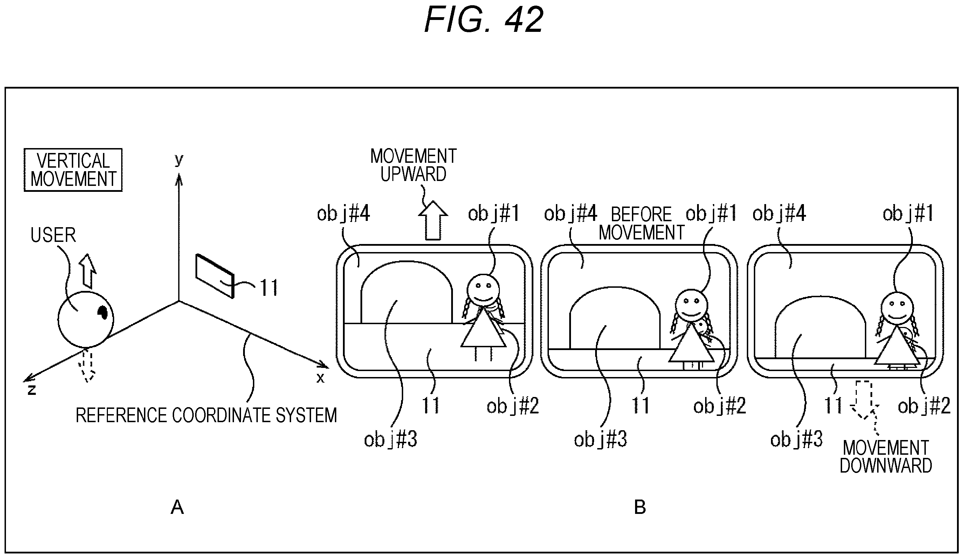

Fig. 42 is a diagram illustrating an example of generating the projected image using a 3D image model when the user is moved in the vertical direction.

A of Fig. 42 shows an example of arranging the display surface 11 and the user on the reference coordinate system at the default timing.

When the user is moved in the vertical direction, the user is moved upward as indicated by a thick solid arrow in A of Fig. 42, or is moved in downward as indicated by a thick dotted arrow in A of Fig. 42, within a plane parallel to the display surface 11 (plane parallel to the xy plane) at the default timing.

B of Fig. 42 shows the projected image generated before the movement (at the default timing) and the projected image generated after the movement when the user is moved in the vertical direction.

In B of Fig. 42, before the user is moved, in accordance with the principle described above with reference to Fig. 5, the projected image is generated as if the display surface 11 serving as a window were right in front of the user and the user were viewing the 3D image model through the window.

Before the user is moved, for example, the projected image is generated in which the substantially entire object obj#2 which is located substantially right behind the object obj#1 hides behind the object obj#1.

Further, after the user is moved upward in the vertical direction, in accordance with the principle described above with reference to Fig. 5, the projected image is generated as if the display surface 11 serving as a window were located below in front of the user and the user were viewing the 3D image model through the window.

Specifically, the projected image is generated in such a manner that, even when the user is moved upward, the 3D image model present on the opposite side (back side) of the display surface 11 as a window remains on the spot, and when the user is moved, the range in which the image model is visible were changed to a range on the lower side of that before the movement.

Further, when the user is moved upward, the projected image is generated in which motion parallax similar to that when an object having a depth is moved upward while the object is viewed in the real world is generated.

Accordingly, after the user is moved upward, as shown in B of Fig. 42, the projected image is generated in such a manner that the difference in height between the object obj#1 and the object obj#2 located substantially right behind the object obj#1 seems to become smaller than that before the movement.

Similarly, when the user moves downward in the vertical direction, the projected image is generated in such a manner that the 3D image model present on the opposite side of the display surface 11 as a window remains on the spot, and when the user is moved, the range in which the image model is visible seems to be changed to a range on the upper side of that before the movement.

Further, when the user is moved downward, the projected image is generated in which motion parallax similar to that when an object having a depth is moved downward while the object is viewed in the real world.

Accordingly, after the user is moved downward, as shown in B of Fig. 42, the projected image is generated in such a manner that the difference in height between the object obj#1 and the object obj#2 located substantially right behind the object obj#1 seems to become larger than that before the movement.

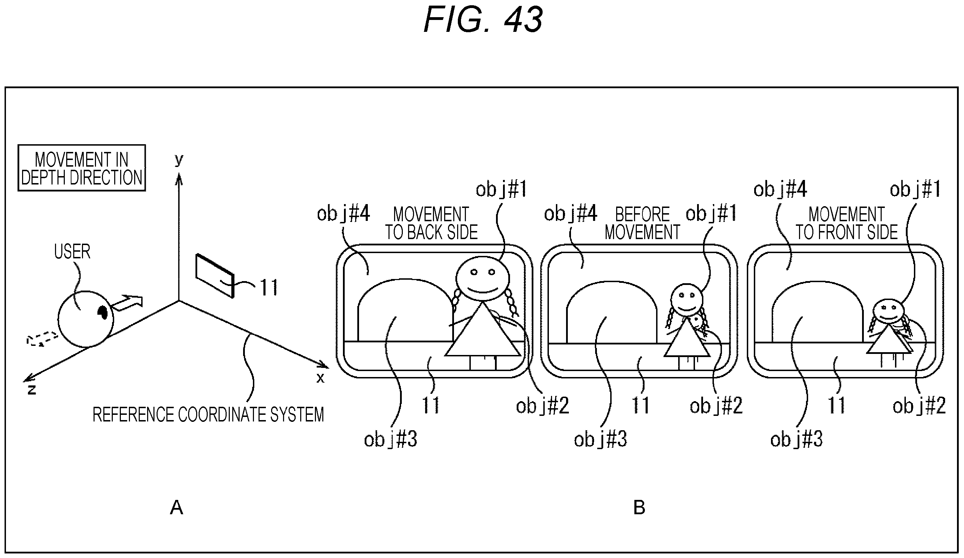

Fig. 43 is a diagram illustrating an example of generating the projected image using a 3D image model when the user is moved in the depth direction.

A of Fig. 43 shows an example of arranging the display surface 11 and the user of the reference coordinate system at the default timing.

When the user is moved in the depth direction, the user is moved in the direction orthogonal to the display surface 11 at the default timing. Specifically, the user is moved in the depth direction (direction from the user to the display surface 11) as indicated by a thick solid arrow in A of Fig. 43, or is moved in the front direction (direction from the display surface 11 to the user) as indicated by a thick dotted arrow in A of Fig. 43.

B of Fig. 43 shows the projected image generated before the movement (at the default timing) and the projected image generated after the movement when the user is moved in the depth direction.

In B of Fig. 43, before the user is moved, in accordance with the principle described above with reference to Fig. 5, the projected image is generated as if the display surface 11 serving as a window were right in front of the user and the user were viewing the 3D image model through the window.

Before the user is moved, for example, the projected image is generated in which the substantially entire object obj#2 substantially right behind the object obj#1 hides behind the object obj#1.

Further, after the user is moved backward in the depth direction, in accordance with the principle described above with reference to Fig. 5, the projected image is generated as if the display surface 11 serving as a window were located near the front of the user and the user were viewing the 3D image model through the window.

Specifically, the projected image is generated in such amanner that, even when the user is moved in the depth direction, the 3D image model present on the opposite side (back side) of the display surface 11 as a window remains on the spot, and when the user is moved, the image mode viewed through the window seems to become larger than that before the movement.

Further, when the user is moved in the depth direction, the projected image is generated in which motion parallax similar to that when an object having a depth is moved backward while the object is viewed in the real world is generated.

Accordingly, after the user is moved in the depth direction, as shown in B of Fig. 43, the projected image is generated in such a manner that the difference in size between the object obj#1 and the object obj#2 located substantially right behind the object obj#1 seems to become larger than that before the movement.

Similarly, also when the user is moved in the front direction in the depth direction, the projected image is generated in such a manner that the 3D image model present on the opposite side of the display surface 11 as a window remains on the spot, and when the user is moved, the image model viewed through the window seems to become smaller than that before the movement.

Further, when the user is moved in the front direction, the projected image is generated in which motion parallax similar to that when an object having a depth is moved to the front side while the object is viewed in the real world is generated.

Accordingly, after the user is moved in the front direction, as shown in B of Fig. 43, the difference in size between the object obj#1 and the object obj#2 located substantially behind the object obj#1 seems to become smaller than that before the movement.

As described above, when the 3D image model is used, the projected image in which motion parallax is generated by the movement of the user is generated.

The motion parallax varies depending on the depth position (depth) of the object forming the 3D image model. However, the motion parallax can be provided not only when the user is moved, but also when the display surface 11 is moved.

Specifically, when the user having the smartphone with him/her views the projected image, the display surface 11 is moved (oscillated) by a camera shake and motion parallax can be provided to the projected image on the basis of the motion of the display surface 11.

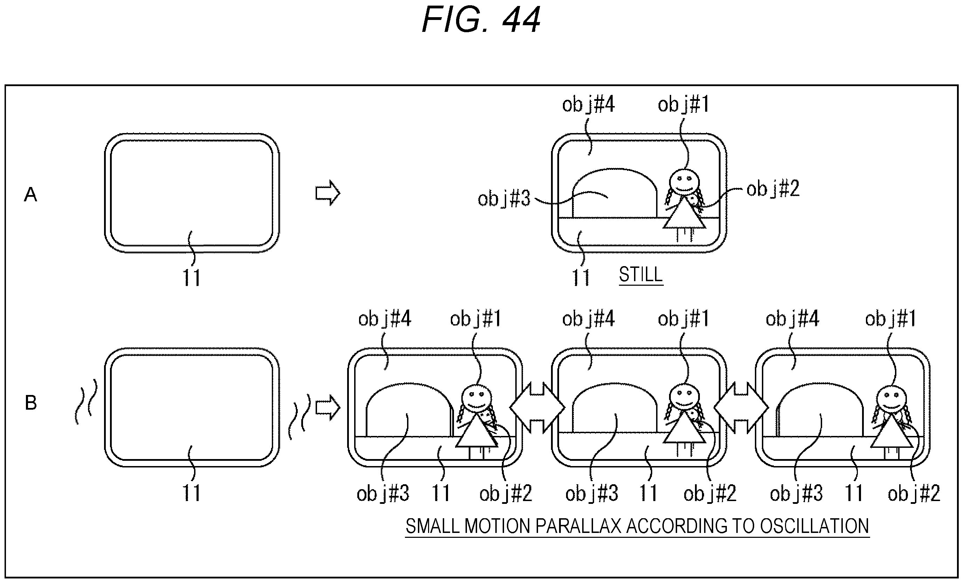

Fig. 44 is a diagram illustrating motion parallax to be provided to the projected image on the basis of the motion of the display surface 11 when the display surface 11 is moved by a camera shake.

A of Fig. 44 shows an example of the projected image when, for example, the smartphone is placed on a table or the like and the display surface 11 is not moved.

When the display surface 11 is not moved, the projected image including no motion parallax is generated.

B of Fig. 44 shows an example of the projected image when, for example, the user has the smartphone in his/her hand and the display surface 11 is moved by a camera shake.

The motion, such as an oscillation, of the display surface 11 is caused by a camera shake, the projected image with motion parallax is generated on the basis of the motion.

In B of Fig. 44, the projected image is generated with motion parallax that occurs such that (the point-of-view of) the user is oscillated from side to side.

As described above, when the motion, such as an oscillation, of the display surface 11 is caused by a camera shake, the projected image with motion parallax is generated on the basis of the motion of the display surface 11, thereby making it possible to emphasize the stereoscopic effect of the projected image displayed on the display surface 11.

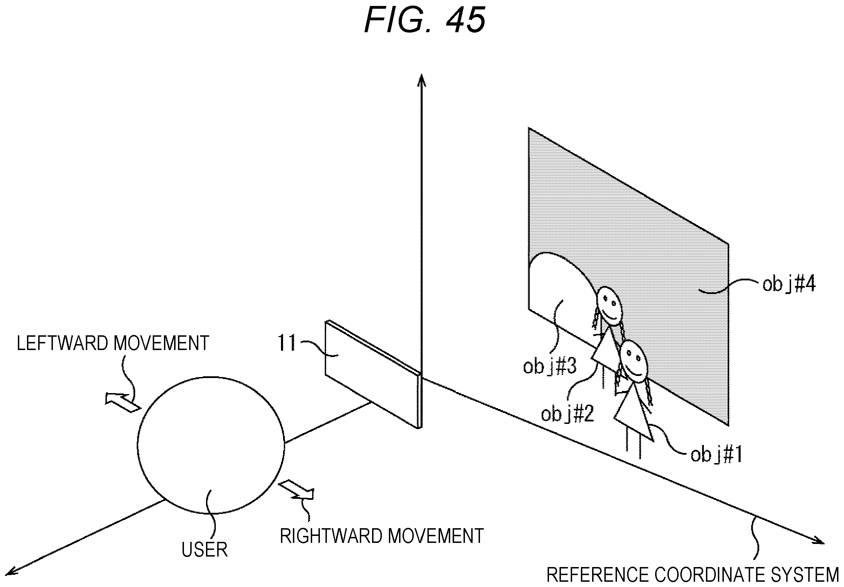

Fig. 45 is a diagram illustrating an example of a method for generating the projected image including a motion parallax on the basis of the motion of the display surface 11.

Specifically, Fig. 45 shows a reference coordinate system in which the user, the display surface 11, and the 3D image model are arranged.

For example, assuming that the user is slightly moved, for example, is oscillated with a magnitude corresponding to the motion of the display surface 11, in the horizontal direction from the right front of the display surface 11, specifically, assuming that the user repeats the leftward movement and the rightward movement as indicated by a thick arrow in Fig. 45, the projected image with motion parallax can be generated based on the motion of the display surface 11 by generating the projected image as described above with reference to Figs. 31 to 33.

### <Enlargement of Difference in Motion Parallax>

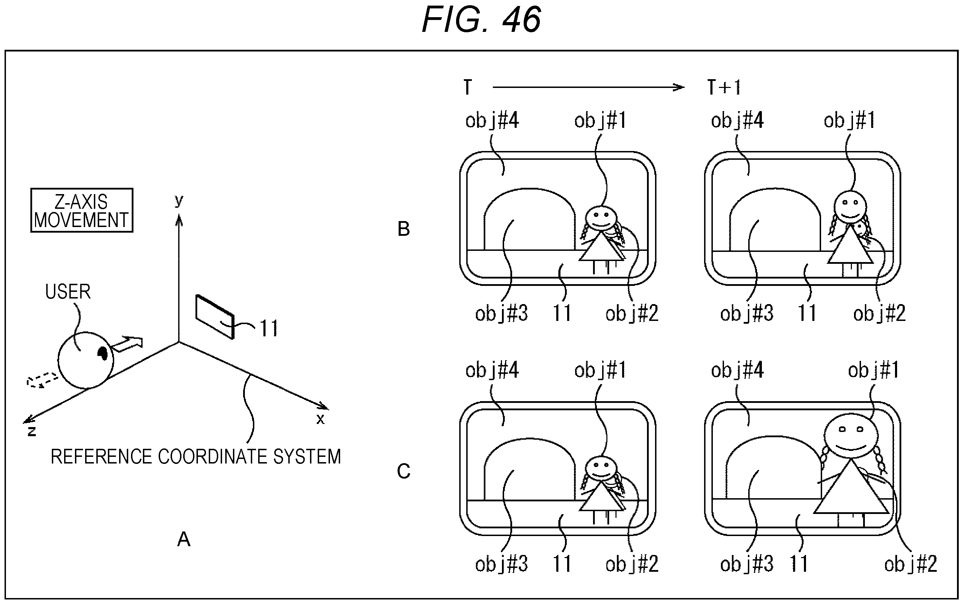

Fig. 46 is a diagram illustrating the enlargement of a difference in a motion parallax.

As described above, when the 3D image model is used and the user is moved, the projected image with motion parallax is generated.

The motion parallax varies depending on the position in the depth direction of the objects constituting the 3D image model. As the objects are located closer to the front side, the motion parallax becomes larger.

When the user is moved and the projected image with motion parallax is generated, for example, the motion parallax can be adjusted for each of the objects constituting the 3D image model.

Fig. 46 is a diagram illustrating an example of adjusting the motion parallax of the projected image using the 3D image model when the user is moved in the depth direction.

A of Fig. 46 shows an example of arranging the display surface 11 and the user in the reference coordinate system at the default timing.

In the movement of the user in the depth direction, the user is moved in the direction orthogonal to the display surface 11 at the default timing. Specifically, the user is moved in the depth direction (direction from the user to the display surface 11) as indicated by a thick solid arrow in A of Fig. 46, or is moved in the front direction (direction from the display surface 11 to the user) as indicated by a thick dotted arrow in A of Fig. 46.

B of Fig. 46 shows the projected image generated before the movement (at the default timing) and the projected image generated after the movement, without adjusting the motion parallax, when the user is moved in the depth direction.

When the motion parallax is not adjusted, the projected image as described above with reference to Fig. 43 is generated.

Specifically, at the time T before the user is moved, in accordance with the principle described above with reference to Fig. 5, the projected image is generated as if the display surface 11 serving as a window were right in front of the user and the user were viewing the 3D image model through the window.

Referring to Fig. 46, before the user is moved, the projected image is generated in which the substantially entire object obj#2 located substantially right behind the object obj#1 hides behind the object obj#1.

Further, at the time T + 1 after the user is moved in the depth direction, in accordance with the principle described above with reference to Fig. 5, the projected image is generated as if the display surface 11 serving as a window were located near the front of the user and the user were viewing the 3D image model through the window.

Specifically, the projected image is generated in such amanner that, even when the user is moved in the depth direction, the 3D image model present on the opposite side (back side) of the display surface 11 as a window remains on the spot, and when the user is moved, the image model viewed through the window seems to become larger than that before the movement.

Further, when the user is moved in the depth direction, the projected image is generated in which motion parallax similar to that when an object having a depth is moved backward while the object is viewed in the real world is generated.

Accordingly, after the user has moved in the depth direction, as shown in B of Fig. 46, the difference in size between the object obj#1 and the object obj#2 located substantially right behind the object obj#1 seems to become larger than that before the movement.

C of Fig. 46 shows the projected image generated before the movement (at the default timing) and the projected image after the movement while adjusting the motion parallax, when the user is moved in the depth direction.

At the time T before the user is moved, the same projected image as that shown in B of Fig. 46 is generated in accordance with the principle described above with reference to Fig. 5.

Then, at the time T + 1 after the user is moved in the depth direction, in accordance with the principle described above with reference to Fig. 5, the projected image is generated as if the display surface 11 serving as a window were located near the front of the user and the user were viewing the 3D image model through the window.

Specifically, the projected image is generated in such a manner that, even when the user is moved in the depth direction, the 3D image model present on the opposite side (back side) of the display surface 11 as a window remains on the spot, and when the user is moved, the image model viewed through the window seems to become larger than that before the movement.

However, when the motion parallax is adjusted, the projected image is generated in such a manner that, among the objects constituting the 3D imagemodel, objects locatedcloser to the front side have larger motion parallax as compared with a case where the motion parallax is not adjusted.

Note that when the motion parallax is adjusted, in order to simplify the processing, the projected image can be generated in such a manner that only some of the objects, such as the object obj#1 located at the frontmost side, among the objects obj#1 to obj#4 constituting the 3D image model, have larger motion parallax as compared with the case where the motion parallax is not adjusted.

As described above, when the motion parallax is adjusted, the projected image is generated in such a manner that, among the objects constituting the 3D image model, the objects located closer to the front side have larger motion parallax as compared with the case where the motion parallax is not adjusted. Accordingly, the difference between the motion parallax of the object located on the front side and the motion parallax of the object located on the back side is enlarged in the projected image.

As a result, the user viewing the projected image feels that there is a large difference between the position in the depth direction of the object located on the front side and that of the object on the back side. Thus, the stereoscopic effect of the projected image can be emphasized.

### <Variations of the display surface 11>

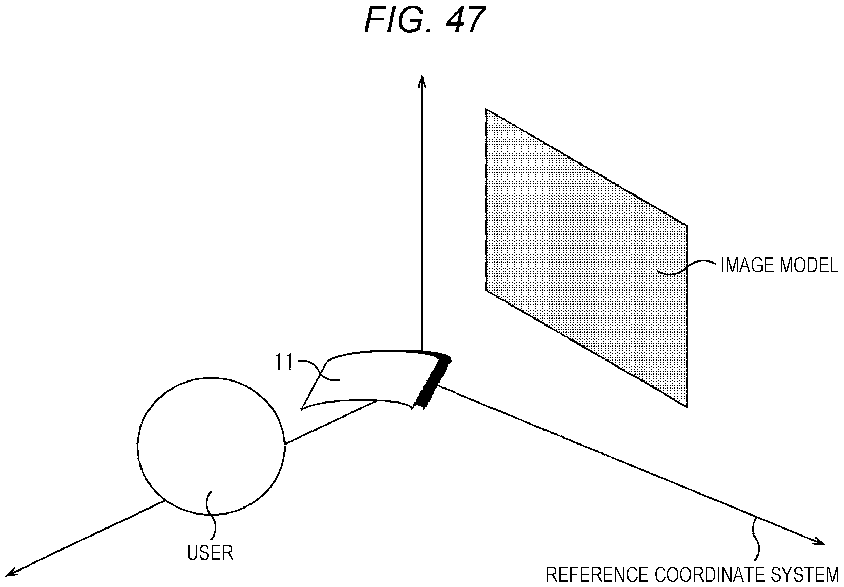

Fig. 47 is a diagram illustrating another configuration example of the display surface 11.

In the case described above, the display surface 11 is a rectangular surface, but instead a surface having a predetermined shape other than the rectangular surface can be adopted as the display surface 11.

Referring to Fig. 47, a surface having a shape obtained by curving a rectangle (hereinafter referredto also as a curved surface) is adopted as the display surface 11, and the surface as well as the user and the image model are arranged on the reference coordinate system.

When the present technology is applied to, for example, a tablet and a smartphone including a display, such as a curved touch panel, the display surface 11 is a curved surface as shown in Fig. 47.

When the display surface 11 is a curved surface, the projected image is generated in accordance with the principle described above with reference to Fig. 5.

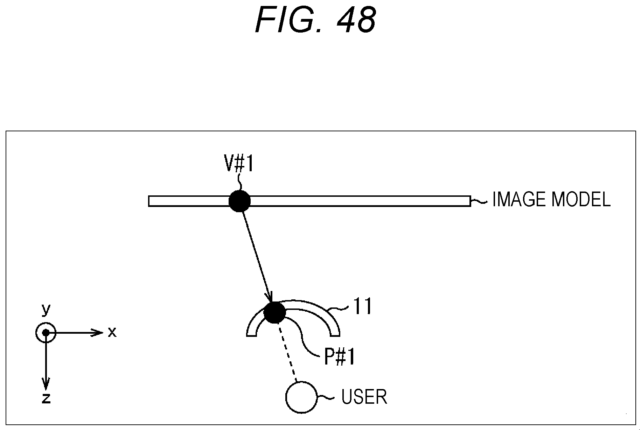

Fig. 48 is a diagram illustrating an example of generating the projected image when the display surface 11 is a curved surface.

Fig. 48 is a view showing the reference coordinate system as viewed in the positive direction of the y-axis. The left-to-right direction, the direction perpendicular to the drawing sheet, and the top-to-bottom direction respectively correspond to the x-axis, the y-axis, and the z-axis of the reference coordinate system.

The projected image displayed on the display surface 11, which is a curved surface, is generated by projecting the voxel V#1 on the pixel P#1 by using the color included in the voxel V#1 located at the position of the image model that intersects with a straight line passing through the user and the pixel P#1 of the display surface 11, which is a curved surface, as the pixel value of the pixel P#1.

Note that not only a surface having a fixed shape, but also a surface having a variable shape can be adopted as the display surface 11.

Also when the display surface 11 is a surface having a variable shape, the projected image is generated in accordance with the principle described above with reference to Fig. 5.

Examples of the display unit 25 (Fig. 3) including the display surface 11 having a variable shape include a thin-film organic Electro Luminescence (EL) display which can be distorted to some extent.

Note that when the display surface 11 has a variable shape, the shape of the display surface 11 is necessary to generate the projected image in accordance with the principle described above with reference to Fig. 5. However, the shape of the display surface 11 can be detected by, for example, the display surface detection unit 22 (Fig. 2).

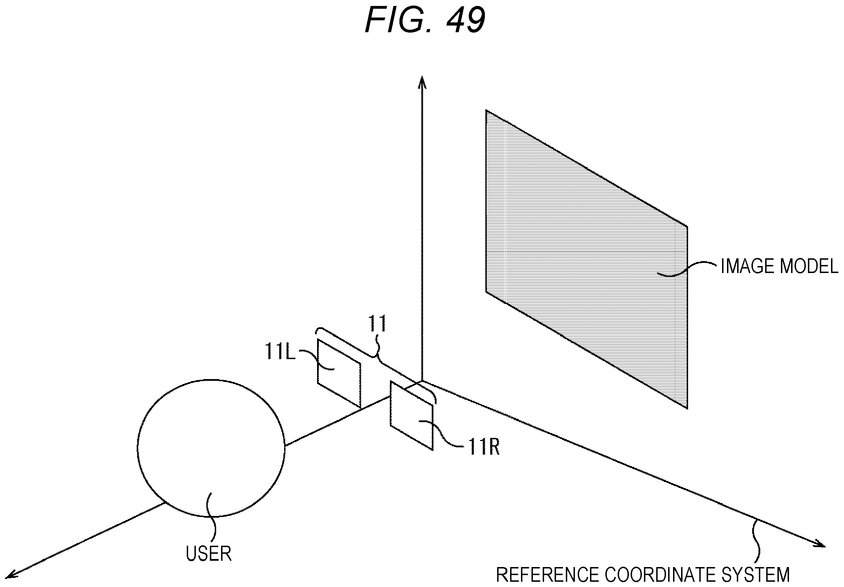

Fig. 49 is a diagram illustrating still another configuration example of the display surface 11.

In the case described above, one surface is adopted as the display surface 11, but instead a plurality of surfaces can be adopted as the display surface 11. When a plurality of surface are adopted as the display surface 11, a number of projected images corresponding to the number of surfaces are generated.

Referring to Fig. 49, two display surfaces 11L and 11R which are arranged side by side in the horizontal direction are adopted as the display surface 11.

Fig. 49 shows the reference coordinate system in which the user, two display surfaces 11L and 11R, and the image model are arranged.

When the two display surfaces 11L and 11R are adopted as the display surface 11, for example, the projected image for the left eye that is obtained by observing an object with the left eye of the user and the projected image for the right eye that is obtained by observing an object with the left eye of the user are generated, thereby making it possible to display the projected image for the left eye on the display surface 11L, which is the left one of the two display surfaces 11L and 11R, and to display the projected image for the right eye on the display surface 11R that is the right one of the two display surfaces.

In this case, the user observes, with the left eye, the projected image for the left eye displayed on the display surface 11L, and the user observes, with the right eye, the projected image for the right eye displayed on the display surface 11R.

The projected image for the left eye is generated in accordance with the principle described above with reference to Fig. 5 in such a manner that, when the user views the pro jected image for the left eye displayed on the display surface 11L, the image projected on the retina of the left eye of the user is similar to the image projected on the retina of the left eye of the user when the image model is viewed through the display surface 11L as a window.

Also, the projected image for the right eye is generated in accordance with the principle described above with reference to Fig. 5, in such a manner that, when the user views the projected image for the right eye displayed on the display surface 11R, the image projected on the retina of the right eye of the user is similar to the image projected on the retina of the right eye of the user when the image model is viewed through the display surface 11R as a window.

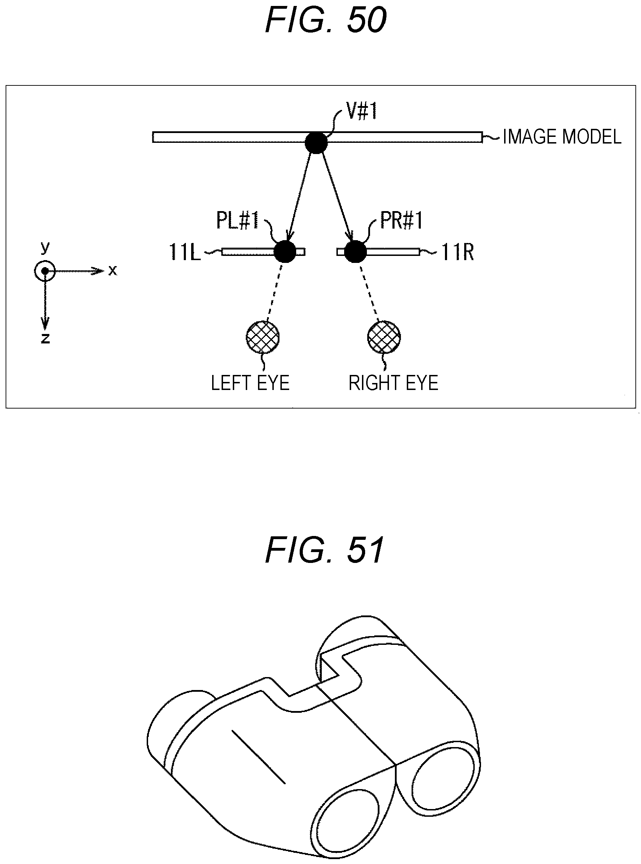

Fig. 50 is a diagram illustrating an example of generating the projected image for the left eye and the projected image for the right eye.

Fig. 50 is a view showing the reference coordinate system viewed in the positive direction of the y-axis. The left-to-right direction, the direction perpendicular to the drawing sheet, and the top-to-bottom direction respectively correspond to the x-axis, the y-axis, and the z-axis of the reference coordinate system.

As for a certain voxel V#1, the projected image for the left eye is generated by projecting the voxel V#1 on the pixel PL#1 of the display surface 11 that intersects with a straight line passing through the voxel V#1 and the left eye of the user, the projected image for the right eye is generated by pro jecting the voxel V#1 on the pixel PR#1 of the display surface 11R that intersects with a straight line passing through the voxel V#1 and the right eye of the user.

Note that the projected image for the left eye and the projected image for the right eye are displayed on the two display surfaces 11L and 11R, respectively, as described above, but instead may be displayed on one display surface 11.

Specifically, the projected image for the left eye and the projected image for the right eye can be displayed, for example, in a region on the left side of one display surface 11 and a region on the right side of the display surface 11.

Further, the projected image for the left eye and the projected image for the right eye can be displayed on one display surface 11, for example, in accordance with a principle similar to that of a 3D display.

### <Second embodiment of the image display apparatus to which the present technology is applied>

Fig. 51 is a perspective view showing a configuration example of a second embodiment of the image display apparatus to which the present technology is applied.

Referring to Fig. 51, the image display apparatus is configured as a binocular and displays a projected image similar to that described in the first embodiment within the binocular.

Thus, the image display apparatus configured as a binocular allows the user looking into the binocular to enjoy feeling as if the user were actually observing the image model with the binocular.

### <Third embodiment of the image display apparatus to which the present technology is applied>

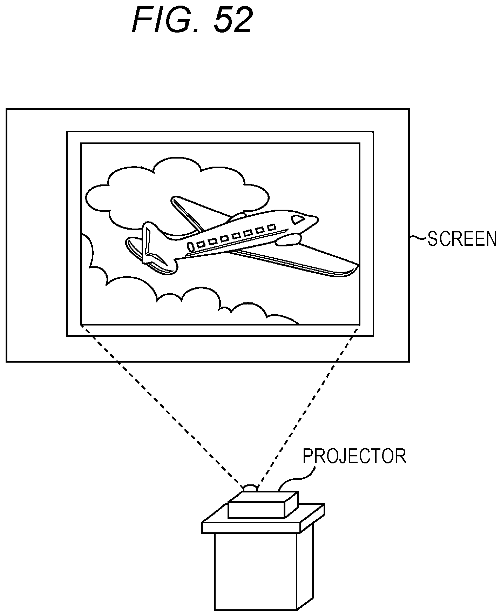

Fig. 52 is a perspective view showing a configuration example of a third embodiment of the image display apparatus to which the present technology is applied.

Referring to Fig. 52, the image display apparatus is configured as a projector system including a projector and a screen, and displays, on the screen, an image corresponding to the light of the projected image output from the projector.

In the image display apparatus configured as a projector system, the display surface 11 is a screen (including a wall or the like that functions as a screen), and the image displayed according to the light output from the projector on the screen as the display surface 11 varies depending on the positional relationship between the projector and the screen.

Specifically, since the projector and the screen as the display surface 11 can be arranged separately, the positional relationship between the projector and the screen varies depending on how to arrange the projector and the screen. Then, when the positional relationship between the projector and the screen is changed, the image displayed on the screen according to the light of the projected image output from the projector is also changed.

For example, simply when the projector outputs light of a certain projected image, the size of the image displayed on the screen increases as the distance between the projector and the screen increases.

Accordingly, when the user views the image displayed on the screen as the display surface 11, in order to allow the user to enjoy feeling as if the user were viewing the image model with the screen as a window, it is necessary to generate the projected image in consideration of the positional relationship between the projector and the screen in the projector system.

Accordingly, The projector system detects the position of the projector as the display apparatus that displays an image (on a screen), as well as display surface information and user position information, and generates a projected image in consideration of the positional relationship between the projector and the screen, on the basis of the position of the projector, as well as the display surface information and the user position information.

Note that the projector system can have, for example, the display surface detection unit 22 (Fig. 2) detect the position of the projector.

### <Magnifying glass mode>

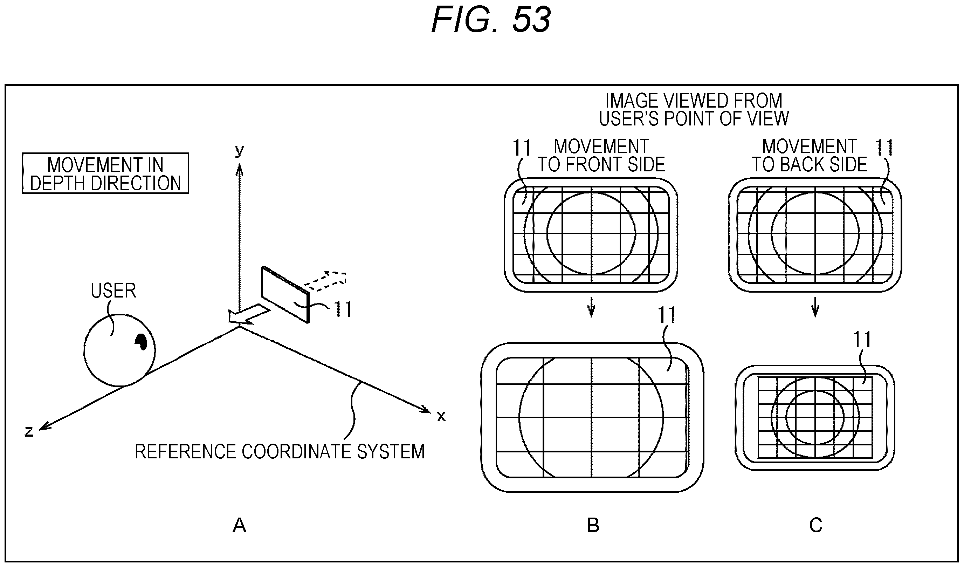

Fig. 53 is a diagram illustrating a magnifying glass mode.

In this case, for example, the smartphone according to the first embodiment has operation modes, i.e., a window mode and a magnifying glass mode.

In the window mode, as described above, the image obtained by reproducing the scenery visible when the user observes the image model through the display surface 11 as a window is generated as a projected image and the projected image is displayed on the display surface 11.

On the other hand, in the magnifying glass mode, for example, the image obtained by reproducing a virtual image viewed when the image model is viewed through the display surface 11 as (a lens of) a magnifier is generated as the projected image, and the projected image is displayed on the display surface 11.

Fig. 53 shows an example of generating the projected image when the magnifying glass mode is used as the operation mode.

A of Fig. 53 shows an example of arranging the display surface 11 and the user on the reference coordinate system at the default timing.

In the magnifying glass mode, the user moves, for example, (the smartphone including) the display surface 11, without changing the posture thereof, in a direction orthogonal to the display surface 11 (z-axis direction) at the default timing in the front direction (front side viewed from the user) as indicated by a thick solid arrow in A of Fig. 53, or is moved in the depth direction (to the back side viewed from the user) as indicated by a thick dotted arrow in A of Fig. 53.

B of Fig. 53 shows the projected image generated before the movement (at the default timing) and the projected image generated after the movement, when the display surface 11 is moved in the front direction.

In B of Fig. 53 before the display surface 11 is moved, the projected image is generated as if the user were viewing the image model to be observed through the display surface 11 as a magnifier and were viewing the image model right in front of the user.

Further, after the display surface 11 is moved in the front direction, the projected image is generated as if the display surface 11 were located as a magnifier right in front of the user and the user were viewing the image model through the magnifier.

Specifically, the projected image is generated in such a manner that, even when the display surface 11 is moved in the front direction, the image model of the still image present on the opposite side (back side) of the display surface 11 as a magnifier remains on the spot, and when the magnifier is moved, the range in which the image model is visible, that is, the viewing angle seems to be changed to a range narrower than that before the movement, with the result that the image model seems to become larger than that before the movement.

C of Fig. 53 shows the projected images before and after the display surface 11 is moved in the depth direction.

Also when the display surface 11 is moved in the depth direction, the projected image is generated in such a manner that the image model present on the opposite side of the display surface 11 as a magnifier remains on the spot, and when the magnifier is moved, the range in which the image model is visible, that is, the viewing angle seems to be changed to a range wider than that before the movement, with the result that the image model seems to become smaller than that before the movement.

As described above, in the magnifying glass mode, the display image to be displayed on the display surface 11 when the display surface 11 is moved in the depth direction is opposite to that when the display surface 11 is moved in the depth direction in the window mode.

Specifically, when the display surface 11 is moved in the front direction, in the window mode, the range of the image model viewed through the display surface 11 as a window is wide, while in the magnifying glass mode, the range of the image model viewed through the display surface 11 as a magnifier is narrow.

When the display surface 11 is moved in the depth direction, in the window mode, the range of the image model viewed through the display surface 11 as a window is narrow, while in the magnifying glass mode, the range of the image model viewed through the display surface 11 as a magnifier is wide.

Accordingly, in the magnifying glass mode, in accordance with the principle described above with reference to Fig. 5, the projected image is generated in such a manner that the display surface 11 in the reference coordinate system is moved in the depth direction when the user moves the display surface 11 in the front direction, and the display surface 11 in the reference coordinate system is moved in the front direction when the user moves the display surface 11 in the depth direction, thereby generating the projected image in which the range of the image model viewed through the display surface 11 as a magnifier when the display surface 11 is moved in the front direction, and the range of the image model viewed through the display surface 11 as a magnifier is wide when the display surface 11 is moved in the depth direction.

As described above, in the image display apparatus to which the present technology is applied, at least the position of the display surface 11 is detected and the projected image obtained by projecting an image model of a predetermined image on the display surface 11 along a straight line passing through the position of the user and the pixel of the display surface 11 whose position is detected is displayed on the display surface 11. Consequently, the UI that allows the user to intuitively select an intended region in the predetermined image, for example, by moving the display surface 11.

Specifically, the user can move, for example, the display surface 11 in the depth direction, and can easily select and view an intended portion in the image model of a still image or a moving image as if the image were oriented on the opposite side of the display surface 11 as a window. Further, the user can move, for example, the display surface 11 in the front direction, and can easily view the entire image model of a still image or a moving image as if the image were oriented on the opposite side of the display surface 11 as a window.

Furthermore, the user can enjoy feeling as if (the structure represented by) the image model remained on the opposite side of the display surface 11 as a window, and can enjoy feeling as if the user were viewing the image model on the opposite side of the display surface 11 through the display surface 11 as a window. Consequently, the user can feel realistic sensation as if the user were actually viewing the image model through the window.

Further, in the image display apparatus to which the present technology is applied, when the image model is a 3D image model, the projected image with motion parallax can be generated on the basis of the motion of the display surface 11, and the difference in motion parallax between the object located on the front side of the 3D image model and the object located on the back side thereof can be enlarged, thereby making it possible to emphasize the stereoscopic effect of the projected image displayed on the display surface 11.

Further, in the image display apparatus to which the present technology is applied, for example, when the user having the smartphone with himself/herself as the mage display apparatus is actually located at the location A, the projected image using the image model at the location A can be generated in consideration of the position and the posture of the photographing apparatus during previous photographing at the location A, and the projected image can be displayed on the display surface 11. Therefore, the user can enjoy feeling as if the user were viewing the scenery in the past through at the location A the display surface 11 as a window.

Note that During photographing at the location A, when photographing of the image of the scenery at the location A and recording of sound (audio) are carried out, in the image display apparatus, the projected image using the image model obtained from the image of the scenery at the location A can be displayed on the display surface 11, and the sound recorded during photographing at the location A can be output from a speaker which is not shown. In this case, a situation during photographing at the location A can be reproduced by both the image (projected image) and the sound.

### <Description of a computer to which the present technology is applied>

Next, the series of processes of the control unit 24 described above can be executed by hardware or software. When the series of processes are executed by software, a program constituting the software is installed in a general-purpose computer or the like.

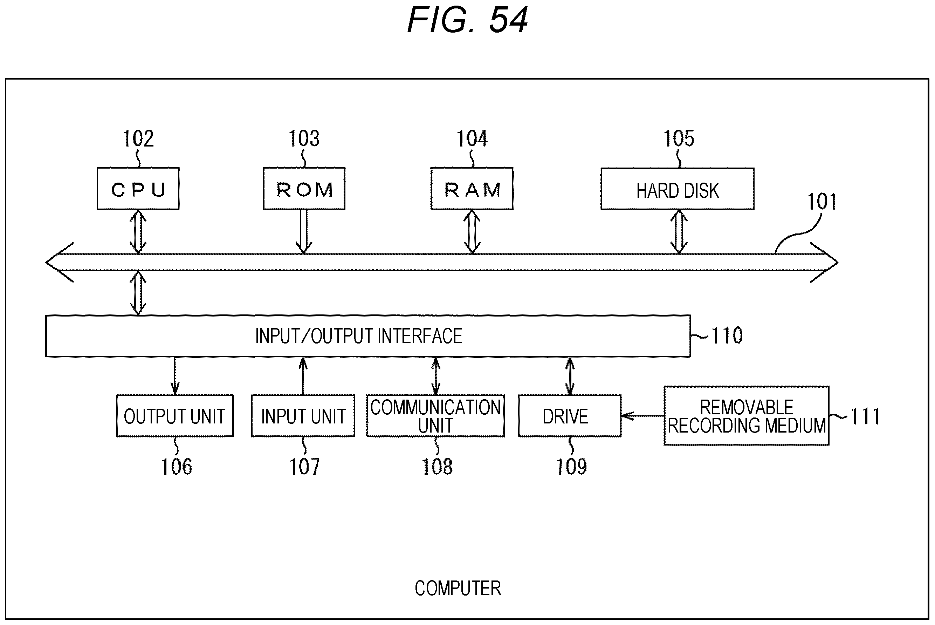

Fig. 54 shows a configuration example of one embodiment of the computer in which the program for executing the series of processes is installed.

The program can be preliminarily recorded in a hard disk 105 or a ROM 103 as a recording medium built in a computer.

Alternatively, the program can be stored (recorded) in a removable recording medium 111. The removable recording medium 111 can be provided as so-called package software. In this case, examples of the removable recording medium 111 include a flexible disk, a Compact Disc Read Only Memory (CD-ROM), a Magneto Optical (MO) disk, a Digital Versatile Disc (DVD), a magnetic disk, and a semiconductor memory.

Note that the program can be installed in a computer from the above-mentioned removable recording medium 111, can be downloaded into a computer via a communication network or a broadcasting network, and can be installed in the built-in hard disk 105. Specifically, the program can be wirelessly transferred to the computer via an artificial satellite for digital satellite broadcasting, for example, from a download site, or can be transferred to a computer with a wire via a network such as a Local Area Network (LAN) or the Internet.

The computer has a Central Processing Unit (CPU) 102 built therein, and the CPU 102 is connected to an input/output interface 110 via a bus 101.

When the user operates, for example, the input unit 107 via the input/output interface 110 to input a command, the CPU 102 executes a program stored in the Read Only Memory (ROM) 103 according to the command. Alternatively, the CPU 102 loads a program stored in the hard disk 105 into the RAM (Random Access Memory) 104 and executes the program.

Thus, the CPU 102 performs processing according to the flowchart described above, or processing with the configuration illustrated in the block diagram described above. Then, the CPU 102 outputs the processing result, as needed, from the output unit 106, for example, via the input/output interface 110, or transmits the processing result from the communication unit 108, and further, for example, records the processing result in the hard disk 105.

Note that the input unit 107 is configured as a keyboard, a mouse, a microphone, or the like. The output unit 106 is configured as a Liquid Crystal Display (LCD), a speaker, or the like.

The processing performed by a computer according to a program as herein described need not be sequentially carried out in a time series illustrated in the flowchart. Specifically, the processing performed by the computer according to the program includes processing (for example, parallel processing or processing using an object) which is executed in parallel or separately.

Further, the program may be processed by one computer (processor), or may be processed in a distributed manner by a plurality of computers. Further, The program may be transferred to a computer located far away and may be executed by the computer.

Further, the system described herein refers to a set of a plurality of components (apparatuses, modules (components), etc.), and there is no need for all components to be accommodated in a case. Accordingly, the plurality of apparatuses which are accommodated in separate cases and connected via a network are referred to as a system, and one apparatus in which a plurality of modules accommodated in one case is also referred to as a system.

Note that the embodiments of the present technology are not limited to the embodiments described above, and can be modified in various ways without departing from the scope of the present technology.

For example, the present technology can employ a cloud computing configuration in which one function is processed and shared among a plurality of apparatuses via a network.

Further, each of the steps described above with reference to the flowchart can be executed by one apparatus, or can be shared and executed by a plurality of apparatuses.

Further, when a plurality of processes are included in one step, the plurality of processes included in the one step can be executed by one apparatus, or can be shared and executed by a plurality of apparatuses.

Further, the advantageous effects described herein are illustrative only and are not limited to them. Advantageous effects other than these advantageous effects may be provided.

Note that the present technology can employ the following configurations.

<1> A display control apparatus including:
   a detection unit that detects a position of a display surface on which a display apparatus displays an image; and
   a control unit that controls the display apparatus in such a manner that a projected image obtained by projecting an image model of a predetermined image onto the display surface is displayed on the display surface along a straight line passing through a position of a user and a pixel of the display surface, the position of the display surface being detected by the detection unit.
<2> The display control apparatus according to <1>, wherein the detection unit detects one or more positions in a horizontal direction, a vertical direction, and a depth direction of the display surface.
<3> The display control apparatus according to <2>, further including another detection unit that detects the position of the user,
   wherein the control unit controls the display apparatus to display, on the display surface, the projected image obtained by projecting the image model on the display surface along a straight line passing through the pixel of the display surface and the position of the user, the position of the display surface being detected by the detection unit, the position of the user being detected by the other detection unit.
<4> The display control apparatus according to <3>, wherein the other detection unit detects one or more positions in a horizontal direction, a vertical direction, and a depth direction of the user.
<5> The display control apparatus according to <3> or <4>, wherein
   the detection unit detects a position and a posture of the display surface, and
   the control unit controls the display apparatus to display, on the display surface, the projected image obtained by projecting the image model onto the display surface along a straight line passing through the pixel of the display surface and the position of the user, the position and posture of the display surface being detected by the detection unit, the position of the user being detected by the other detection unit.
<6> The display control apparatus according to <5>, wherein the detection unit detects, as the posture of the display surface, one or more rotation angles in a pitch direction, a yaw direction, and a roll direction of the display surface.
<7> The display control apparatus according to any of <5> or <6>, wherein the control unit generates the projected image by using the position and the posture of the display surface and the position of the user.
<8> The display control apparatus according to <7>, wherein the control unit generates, as the projected image, an image obtained by reproducing a scenery visible when the user views the image model through the display surface as a window by using the position and the posture of the display surface and the position of the user.
<9> The display control apparatus according to any of <1> to <8>, wherein the image model is a 2D (Dimensional) image model or a 3D image model.
<10> The display control apparatus according to any of <1> to <9>, wherein the image model is formed of voxels each including information indicating a color and a position, each of the voxels being used as a component.
<11> The display control apparatus according to <10>, wherein the control unit generates the projected image obtained by projecting, as a color of a pixel of the display surface, the color of the voxel intersecting with a straight line passing through the pixel of the display surface and the position of the user.
<12> The display control apparatus according to <10> or <11>, wherein the voxel includes positions in a horizontal direction, a vertical direction, and a depth direction of the voxel.
<13> The display control apparatus according to <8>, wherein the control unit generates the projected image obtained by enlarging a difference in motion parallax between objects located at different positions in the depth direction among objects within the projected image.
<14> The display control apparatus according to <8>, wherein the control unit generates, on the basis of a motion of the display surface, the projected image to which motion parallax is provided.
<15> The display control apparatus according to any of <1> to <14>, wherein the display surface is a surface having a predetermined shape.
<16> The display control apparatus according to any of <1> to <15>, wherein the display surface is a surface having a fixed shape, or a surface having a variable shape.
<17> The display control apparatus according to <8>, wherein
   the detection unit further detects a position of the display apparatus, and
   when a positional relationship between the display apparatus and the display surface is changed, the control unit generates the projected image by using the position and the posture of the display surface, the position of the user, and the position of the display apparatus.
<18> The display control apparatus according to <8>, wherein the control unit generates the projected image by arranging the image model on the basis of a position and a posture of a photographing apparatus when a content of the image model is photographed by the photographing apparatus.
<19> The display control apparatus according to <8>, wherein the control unit generates a plurality of the projected images.
<20> The display control apparatus according to <19>, wherein the control unit generates a projected image for a left eye and a projected image for a right eye.
<21> The display control apparatus according to <20>, wherein the projected image for the left eye and the projected image for the right eye are displayed on one display surface.
<22> The display control apparatus according to any of <1> to <8>, wherein the display control apparatus is configured as a binocular.
<23> A display control method including the steps of:
   detecting a position of a display surface on which a display apparatus displays an image; and
   controlling the display apparatus to display, on the display surface, a projected image obtained by projecting an image model of a predetermined image onto the display surface along a straight line passing through a position of a user and a pixel of the display surface, the position of the display surface being detected.
<24> A program for causing a computer to function as:
   a detection unit that detects a position of a display surface on which a display apparatus displays an image; and
   a control unit that controls the display apparatus to display, on the display surface, a projected image obtained by projecting an image model of a predetermined image onto the display surface along a straight line passing through a position of a user and a pixel of the display surface, the position of the display surface being detected by the detection unit.

### REFERENCE SIGNS LIST

- 11: Display surface
- 12: Camera
- 21: Data acquisition unit
- 22: Display surface detection unit
- 23: User detection unit
- 24: Control unit
- 25: Display unit
- 31: Reference coordinate system generation unit
- 32: Display surface information acquisition unit
- 33: Image model generation unit
- 34: User position information acquisition unit
- 35: Display surface arrangement unit
- 36: Image model arrangement unit
- 37: User arrangement unit
- 38: Image generation unit
- 101: Bus
- 102: CPU
- 103: ROM
- 104: RAM
- 105: Hard disk
- 106: Output unit
- 107: Input unit
- 108: Communication unit
- 109: Drive
- 110: Input/output interface
- 111: Removable recording medium

## Claims

1. A display control apparatus comprising:
a detection unit that detects a position of a display surface on which a display apparatus displays an image; and
a control unit that controls the display apparatus in such a manner that a projected image obtained by projecting an image model of a predetermined image onto the display surface is displayed on the display surface along a straight line passing through a position of a user and a pixel of the display surface, the position of the display surface being detected by the detection unit.

2. The display control apparatus according to claim 1, wherein the detection unit detects one or more positions in a horizontal direction, a vertical direction, and a depth direction of the display surface.

3. The display control apparatus according to claim 2, further comprising another detection unit that detects the position of the user,
wherein the control unit controls the display apparatus to display, on the display surface, the projected image obtained by projecting the image model on the display surface along a straight line passing through the pixel of the display surface and the position of the user, the position of the display surface being detected by the detection unit, the position of the user being detected by the other detection unit.

4. The display control apparatus according to claim 3, wherein the other detection unit detects one or more positions in a horizontal direction, a vertical direction, and a depth direction of the user.

5. The display control apparatus according to claim 4, wherein
the detection unit detects a position and a posture of the display surface, and
the control unit controls the display apparatus to display, on the display surface, the projected image obtained by projecting the image model onto the display surface along a straight line passing through the pixel of the display surface and the position of the user, the position and posture of the display surface being detected by the detection unit, the position of the user being detected by the other detection unit.

6. The display control apparatus according to claim 5, wherein the detection unit detects, as the posture of the display surface, one or more rotation angles in a pitch direction, a yaw direction, and a roll direction of the display surface.

7. The display control apparatus according to claim 6, wherein the control unit generates the projected image by using the position and the posture of the display surface and the position of the user.

8. The display control apparatus according to claim 7, wherein the control unit generates, as the projected image, an image obtained by reproducing a scenery visible when the user views the image model through the display surface as a window by using the position and the posture of the display surface and the position of the user.

9. The display control apparatus according to claim 8, wherein the image model is a 2D (Dimensional) image model or a 3D image model.

10. The display control apparatus according to claim 8, wherein the image model is formed of voxels each including information indicating a color and a position, each of the voxels being used as a component.

11. The display control apparatus according to claim 10, wherein the control unit generates the projected image obtained by projecting, as a color of a pixel of the display surface, the color of the voxel intersecting with a straight line passing through the pixel of the display surface and the position of the user.

12. The display control apparatus according to claim 11, wherein the voxel includes positions in a horizontal direction, a vertical direction, and a depth direction of the voxel.

13. The display control apparatus according to claim 8, wherein the control unit generates the projected image obtained by enlarging a difference in motion parallax between objects located at different positions in the depth direction among objects within the projected image.

14. The display control apparatus according to claim 8, wherein the control unit generates, on the basis of a motion of the display surface, the projected image to which motion parallax is provided.

15. The display control apparatus according to claim 8, wherein the display surface is a surface having a predetermined shape.

16. The display control apparatus according to claim 8, wherein the display surface is a surface having a fixed shape, or a surface having a variable shape.

17. The display control apparatus according to claim 8, wherein
the detection unit further detects a position of the display apparatus, and
when a positional relationship between the display apparatus and the display surface is changed, the control unit generates the projected image by using the position and the posture of the display surface, the position of the user, and the position of the display apparatus.

18. The display control apparatus according to claim 8, wherein the control unit generates the projected image by arranging the image model on the basis of a position and a posture of a photographing apparatus when a content of the image model is photographed by the photographing apparatus.

19. The display control apparatus according to claim 8, wherein the control unit generates a plurality of the projected images.

20. The display control apparatus according to claim 19, wherein the control unit generates a projected image for a left eye and a projected image for a right eye.

21. The display control apparatus according to claim 20, wherein the projected image for the left eye and the projected image for the right eye are displayed on one display surface.

22. The display control apparatus according to claim 8, wherein the display control apparatus is configured as a binocular.

23. A display control method comprising the steps of:
detecting a position of a display surface on which a display apparatus displays an image; and
controlling the display apparatus to display, on the display surface, a projected image obtained by projecting an image model of a predetermined image onto the display surface along a straight line passing through a position of a user and a pixel of the display surface, the position of the display surface being detected.

24. A program for causing a computer to function as:
a detection unit that detects a position of a display surface on which a display apparatus displays an image; and
a control unit that controls the display apparatus to display, on the display surface, a projected image obtained by projecting an image model of a predetermined image onto the display surface along a straight line passing through a position of a user and a pixel of the display surface, the position of the display surface being detected by the detection unit.
